# EUROPEAN PATENT SPECIFICATION

(11) **EP 2 415 607 B1**
(45) Date of publication and mention of the grant of the patent: **08.01.2014**
(21) Application number: 11174456.1
(22) Date of filing: 19.07.2011
(51) Int. Cl.: B41M 5/00, B41M 7/00

(54) **Inkjet recording method**
Tintenstrahlaufzeichnungsverfahren
Procédé d'enregistrement par jet d'encre

(30) Priority: 29.07.2010 JP 2010170811; 08.02.2011 JP 2011025056
(43) Date of publication of application: 08.02.2012
(73) Proprietor: FUJIFILM Corporation, Tokyo (JP)
(72) Inventor: Fujii, Yuusuke, Ashigarakami-gun, Kanagawa (JP)
(74) Representative: Morpeth, Fraser Forrest

(56) References cited:
- JP-A- 2009 242 684
- US-A1- 2006 050 121
- US-A1- 2007 176 993
- US-A1- 2009 081 420
- US-A1- 2010 110 144
- US-A1- 2010 141 709

## Description

The present invention relates to an inkjet recording method.

As image recording methods for forming an image on a recording medium such as paper based on an image data signal, there are an electrophotographic system, sublimation type and melt type thermal transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low particularly in the case of small lot production. Furthermore, there is little noise and it is excellent as an image recording system, and has thus been attracting attention in recent years.

In particular, an inkjet recording ink composition that is curable upon exposure to radiation such as UV rays (radiation-curing inkjet recording ink composition) is an excellent system from the viewpoint of it being printed on various types of recording media because of the drying properties being excellent compared with a solvent-based ink composition since the majority of the components of the ink composition cure upon exposure to radiation such as UV rays, and because of the image being resistant to spreading.

As inkjet recording ink compositions that can be cured upon exposure to radiation, ink compositions described in JP-A-2010-70754 (JP-A denotes a Japanese unexamined patent application publication) and JP-A-2009-84441 can be cited.

Furthermore, as an inkjet head used for discharging an ink composition, an inkjet head described in US Pat. No. 7,011,396 can be cited.

Ink jet recording methods of this type are also disclosed in US 2007/176993, US2010/141709, US 2009/081420, JP 2009 242684.

In order to obtain high image quality images with high productivity, it is necessary to employ inkjet recording equipment equipped with an inkjet head that can discharge an ink composition as small liquid droplets at high frequency and has high discharge stability, and to employ an ink composition suitable for the inkjet recording equipment.

As one type of inkjet head having high productivity, there is an inkjet head having at least part of a nozzle plate treated so as to have affinity for an ink. The nozzle plate treated so as to have affinity for an ink forms an ink liquid film on the surface of the nozzle plate. Forming the ink liquid film enables inkjet recording to be carried out with high discharge precision and discharge stability. Furthermore, even when ink mist is generated during discharge, because of adsorption on the ink liquid film hardly any discharge problems due to the ink mist occur.

In order to obtain a high definition image, it is essential to use an inkjet head that can discharge small droplets of an ink composition. However, it is difficult to control the thickness of an ink liquid film formed on the surface of the nozzle plate, and when the ink liquid film is too thick, the discharge of small droplets (in particular, small droplets of 100 pL or smaller) sometimes cannot be stabilized, thus causing discharge failure or image quality degradation.

It is an object of the present invention to provide an inkjet recording method that exhibits high discharge stability and can give a high definition image even when an inkjet head with high productivity and an ink composition having high radiation curability are used.

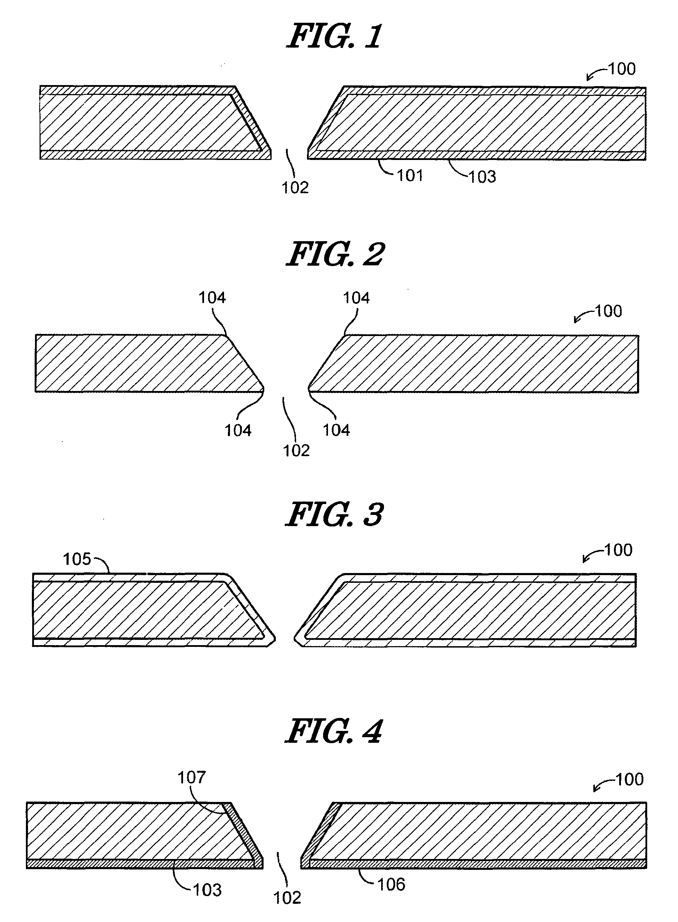

The above-mentioned object has been achieved by means (1) below. They are described below together with (2) to (18), which are preferred embodiments.
(1) An inkjet recording method comprising an image formation step of forming an image on a recording medium by discharging an ink composition comprising a polymerizable compound and a polymerization initiator and having a surface tension at 25°C in a range of 36.0 to 40.0 mN/m using an inkjet head having a nozzle plate (100-Figure 1) with a face on the ink discharge side (103-Figure 1) treated so as to have affinity for an ink(101-Figure 1); and a curing step of curing the ink composition by irradiating the discharged ink composition with actinic radiation,
(2)The inkjet recording method according to Claim 1, wherein the polymerizable compound comprises (Component A) an *N*-vinyl compound, (Component B) a monofunctional (meth)acrylate compound, and (Component C) a polyfunctional (meth)acrylate compound.
(3) the inkjet recording method according to (1) or (2) above, wherein the nozzle plate comprises a layer formed from at least one type selected from the group consisting of diamond-like carbon, a metal, a semimetal oxide, a metal oxide, a semimetal nitride, and a metal nitride on at least part of the face on the ink discharge side,
(4) the inkjet recording method according to any one of (1) to (3) above, wherein the nozzle plate comprises a layer formed from at least one type selected from the group consisting of gold, stainless steel, iron, titanium, tantalum, platinum, rhodium, nickel, chromium, silicon oxide, silicon nitride, and aluminum nitride on at least part of the face on the ink discharge side,
(5) the inkjet recording method according to any one of (1) to (4) above, wherein the nozzle plate comprises a layer formed from at least one type selected from the group consisting of gold, stainless steel, and silicon oxide on at least part of the face on the ink discharge side,
(6) the inkjet recording method according to any one of (1) to (5) above, wherein the nozzle plate comprises a layer formed from at least one type selected from the group consisting of gold and silicon oxide on at least part of the face on the ink discharge side,
(7) the inkjet recording method according to any one of (1) to (6) above, wherein the nozzle plate comprises a layer formed from gold on at least part of the face on the ink discharge side,
(8) the inkjet recording method according to any one of (1) to (7) above, wherein the ink composition discharged in the image formation step has a liquid droplet volume of 1 to 100 pL,
(9) the inkjet recording method according to any one of (2) to (8) above, wherein Component B is an aromatic hydrocarbon group-containing (meth)acrylate compound,
(10) the inkjet recording method according to any one of (2) to (9) above, wherein Component B is 2-phenoxyethyl (meth)acrylate or benzyl (meth)acrylate,
(11) the inkjet recording method according to any one of (2) to (10) above, wherein Component C has a content in the ink composition of no greater than 50 wt%,
(12) the inkjet recording method according to any one of (1) to (11) above, wherein the polymerization initiator has a content in the ink composition of no greater than 20 wt%,
(13) the inkjet recording method according to any one of (1) to (12) above, wherein the ink composition further comprises a colorant,
(14) the inkjet recording method according to (13) above, wherein the colorant comprises a pigment or an oil-based dye,
(15) the inkjet recording method according to any one of (1) to (14) above, wherein the ink composition has a surface tension at 25°C of 36.0 to 39.0 mN/m,
(16) the inkjet recording method according to any one of (1) to (15) above, wherein the ink composition discharged in the image formation step has a liquid droplet volume of 10 to 30 pL,
(17) the inkjet recording method according to any one of (1) to (16) above, wherein the polymerization initiator in the ink composition comprises an acylphosphine compound and a thioxanthone compound and/or a thiochromanone compound,
(18) the inkjet recording method according to any one of (2) to (17) above, wherein Component C is a urethane (meth)acrylate-based oligomer.

### BRIEF DESCRIPTION OF DRAWINGS

FIG. 1 shows a schematic diagram showing a cross-section of a nozzle plate having a silicon oxide film formed thereon.
FIG. 2 shows a schematic diagram showing a cross-section of a nozzle plate from which the silicon oxide film has been removed.
FIG. 3 shows a schematic diagram showing a cross-section of a nozzle plate having a protective layer formed thereon.
FIG. 4 shows a schematic diagram showing a cross-section of a nozzle plate having a metal layer formed thereon.
FIG. 5 shows a schematic diagram showing a face on the ink discharge side of a nozzle plate having a metal layer formed thereon.

### EXPLANATION OF REFERENCE NUMERALS AND SYMBOLS

100: Nozzle plate, 101: Silicon oxide film, 102: Discharge aperture, 103: Face on ink discharge side, 104: Edge, 105: Protective layer, 106: Metal layer of nozzle plate surface, 107: Metal layer within nozzle

The inkjet recording method of the present invention comprises an image formation step of forming an image on a recording medium by discharging an ink composition comprising a polymerizable compound and a polymerization initiator and having a surface tension at 25°C in a range of 36.0 to 40.0 mN/m using an inkjet head having a nozzle plate (100-Figure 1) with a face on the ink discharge side(103-Figure 1) treated so as to have affinity for an ink (101-Figure 1), and a curing step of curing the ink composition by irradiating the discharged ink composition with actinic radiation.

Furthermore, the polymerizable compound preferably comprises (Component A) an *N*-vinyl compound, (Component B) a monofunctional (meth)acrylate compound, and (Component C) a polyfunctional (meth)acrylate compound.

In the specification, the notation 'X to Y', which expresses a numeral range, has the same meaning as 'at least X but no greater than Y'. Furthermore, '(Component A) an *N*-vinyl compound', etc. that are described above are also simply called 'Component A', etc. Moreover, when referring to either or both of 'acrylate' and 'methacrylate', '(meth)acrylate' is also used.

The present invention is explained in detail below.

### 1. Ink composition

At first, the ink composition used in the present invention (hereinafter, also called 'the ink composition of the present invention') is described in detail below.

The ink composition used in the present invention is an ink composition that can cure upon exposure to an actinic radiation and is also an oil-based ink composition.

The 'actinic radiation' is a radiation that can provide energy that enables an initiating species to be generated in the ink composition when irradiated, and broadly includes α rays, γ rays, X rays, ultraviolet rays, visible light, and an electron beam. Among these, ultraviolet rays and an electron beam are preferable from the viewpoint of curing sensitivity and the availability of equipment, and ultraviolet rays are particularly preferable.

Furthermore, since the ink composition used in the present invention is cured after being applied onto a recording medium, it is preferable that it does not contain volatile solvent and is solvent-free. This is because, if volatile solvent remains in a cured ink image, the solvent resistance is degraded, and the VOC (Volatile Organic Compound) problem based on volatile solvent occurs.

The ink composition used in the present invention preferably comprises a polymerizable compound and a polymerization initiator. These polymerizable compound and polymerizaition initiator are described below.

### (Component A) N-vinyl compound

The ink composition used in the present invention preferably comprises (Component A) an *N*-vinyl compound as a polymerizable compound. As the *N*-vinyl compound, an *N*-vinyllactam is preferable and a compound represented by Formula (a-1) is more preferable.

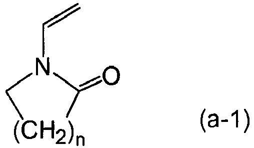

In Formula (a-1), n denotes an integer of 1 to 5; n is preferably an integer of 2 to 4 from the viewpoint of flexibility after the ink composition is cured, adhesion to a recording medium, and ease of availability of starting material, n is more preferably an integer of 2 or 4, and n is particularly preferably 4, which is *N*-vinylcaprolactam, *N*-vinylcaprolactam is preferable since it has excellent safety, is commonly used and easily available at a relatively low price, and gives particularly good ink curability and adhesion of a cured film to a recording medium.

The content of Component A in the ink composition used in the present invention is preferably in the range of 5 to 60 wt% relative to the weight of the entire ink composition, more preferably in the range of 15 to 35 wt%. When the content is 5 wt% or greater the adhesion to a substrate is excellent, and when the content is no greater than 60 wt % the storage stability is excellent.

### (Component B) Monofunctional (meth)acrylate compound

The ink composition used in the present invention preferably comprises (Component B) a monofunctional (meth)acrylate compound as a polymerizable compound. When the ink composition comprises Component B, discharge stability and curability of the ink composition are improved. Component B is preferably a compound having a molecular weight of no greater than 500, and more preferably no greater than 300.

Preferred examples of Component B include an aromatic hydrocarbon group-containing monofunctional (meth)acrylate compound described in paragraphs 0048 to 0063 of JP-A-2009-096985. In the present invention, the aromatic hydrocarbon group-containing monofunctional (meth)acrylate compound is preferably a compound represented by Formula (b-1). 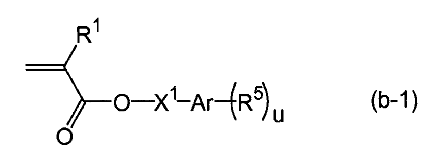 (In Formula (b-1), R¹ denotes a hydrogen atom or a methyl group, X¹ denotes a divalent linking group, Ar denotes an aromatic hydrocarbon group, R⁵ denotes a substituent, u denotes an integer of 0 to 5, and the u R⁵s may be identical to or different from each other.)

In Formula (b-1), R¹ is preferably a hydrogen atom. X¹ denotes a divalent linking group, and preferably an ether bond (-O-), an ester bond (-C(O)O- or -OC(O)-), an amide bond (-C(O)NR'- or -NR'C(O)-), a carbonyl group (-C(O)-), an imino group (-NR'-), an optionally substituted alkylene group having 1 to 15 carbons, or a divalent group in which two or more thereof are combined. R' denotes a hydrogen atom, a straight-chain, branched, or cyclic alkyl group having 1 to 20 carbons, or an aryl group having 6 to 20 carbons. Examples of the substituent include a hydroxy group and a halogen atom.

The moiety containing R¹ and X¹ (H₂C=C(R¹)-C(O)O-X¹-) may be bonded to any position of the aromatic hydrocarbon group.

From the viewpoint of improving affinity with a colorant, the end of X¹ bonded to the aromatic hydrocarbon group in Formula (b-1) is preferably an oxygen atom, and more preferably an ethereal oxygen atom. X¹ in Formula (b-1) is preferably *-(LO)q-.

Here, * denotes the position at which X¹ and the carbonic ester bond in Formula (b-1) are bonded, q is an integer of 0 to 10, and L denotes an alkylene group having 2 to 4 carbons. q is preferably an integer of 0 to 4, more preferably an integer of 0 to 2, and yet more preferably 1 or 2. (LO)q is preferably an ethylene oxide chain or a propylene oxide chain.

Ar denotes an aromatic hydrocarbon group. Examples of the aromatic hydrocarbon group include a monocyclic aromatic hydrocarbon group having 1 ring and a polycyclic aromatic hydrocarbon group having 2 to 4 rings. Specific examples thereof include a group in which at least one hydrogen atom is removed from benzene, naphthalene, anthracene, 1*H*-indene, 9*H*-fluorene, 1*H*-phenalene, phenanthrene, triphenylene, pyrene, naphthacene, tetraphenylene, biphenylene, as-indacene, s-indacene, acenaphthylene, fluoranthene, acephenanthrylene, aceanthrylene, chrysene, and pleiadene, etc.

Among them, in the present invention, a phenyl group and a naphthyl group are preferable, and a monocyclic aromatic hydrocarbon group, that is a phenyl group, is more preferable.

It is preferable that the u R⁵s independently represent a halogen atom, a carboxy group, an acyl group having 1 to 10 carbons, a hydroxy group, a substituted or unsubstituted amino group, a thiol group, a siloxane group, or an optionally substituted hydrocarbon group, alkoxy group or heterocyclic group having a total number of carbons of no greater than 30. The substituents include a hydroxy group, an alkyl group having 1 to 10 carbons, and an aryl group having 6 to 12 carbons.

u denotes an integer of 0 to 5, and is preferably 0.

Specific preferred examples of Formula (b-1) include [L-1] to [L-11] and [L-13] to [L-65], but are not limited to those below. In some of the compounds in the present specification, a hydrocarbon chain is given as a simplified structural formula in which symbols for carbon (C) and hydrogen (H) are omitted. Furthermore, Me denotes a methyl group.

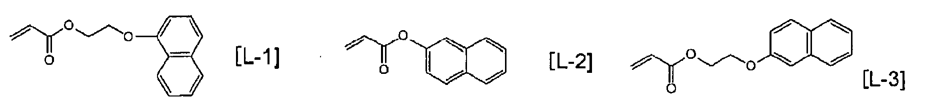

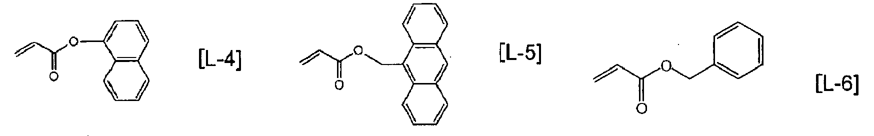

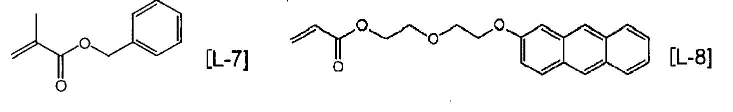

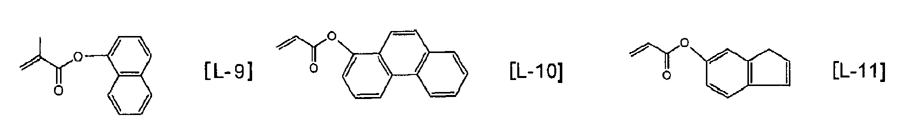

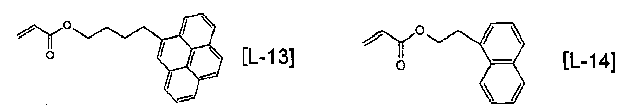

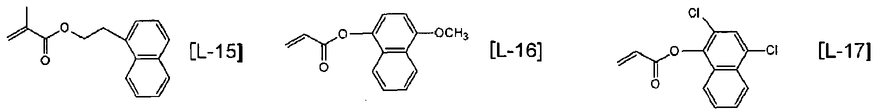

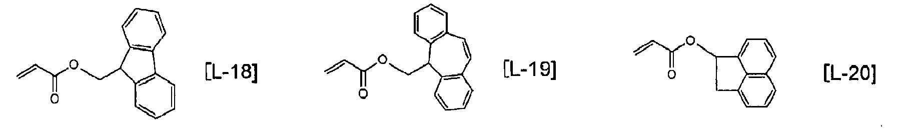

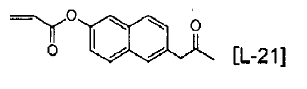

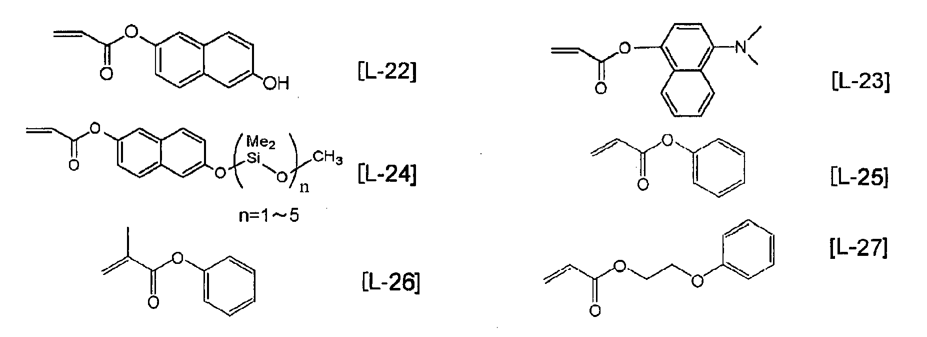

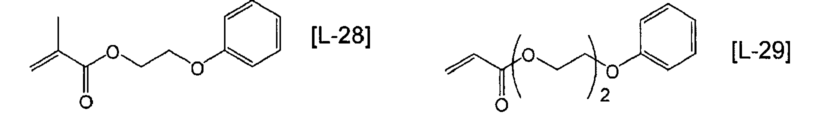

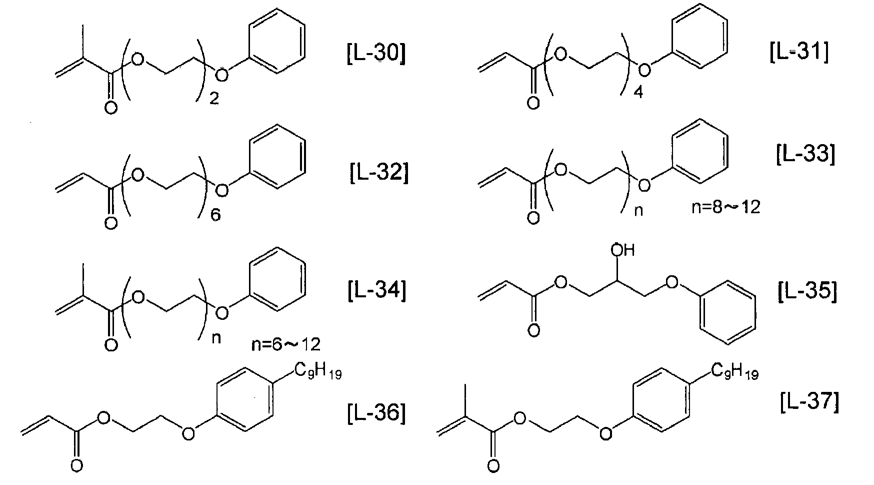

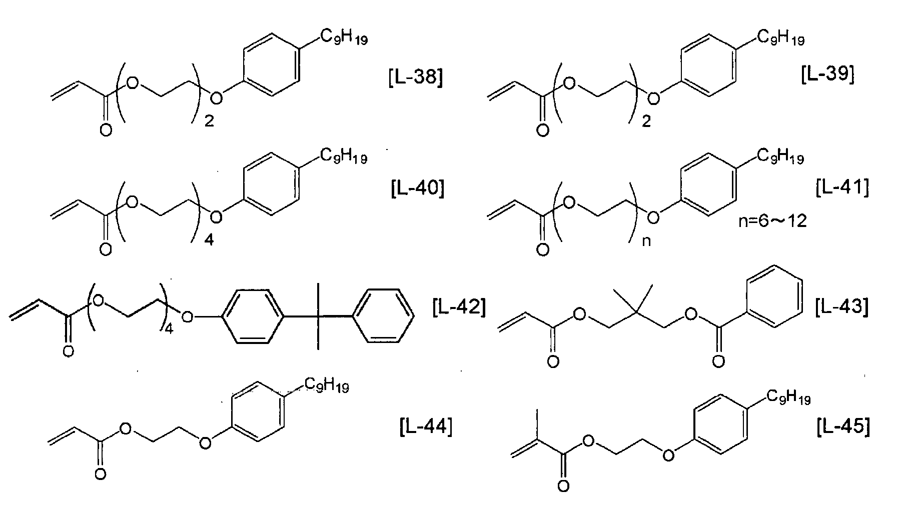

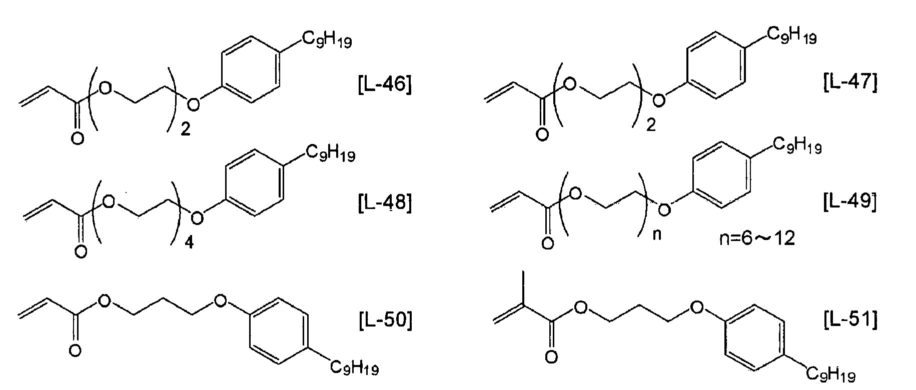

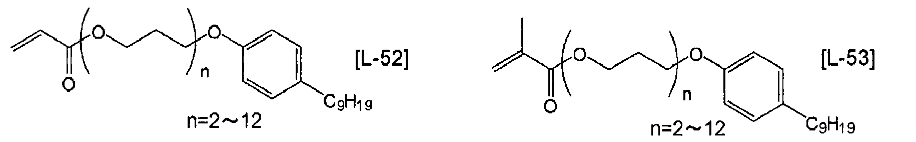

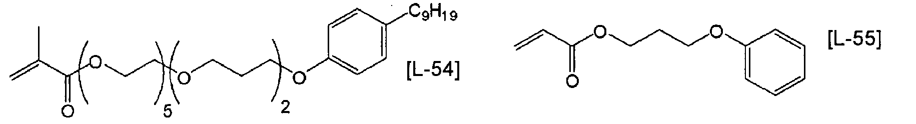

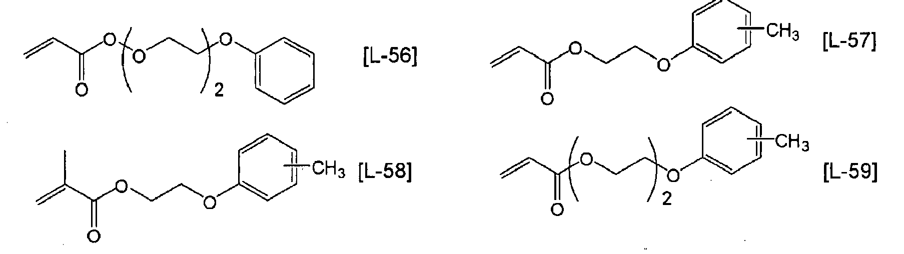

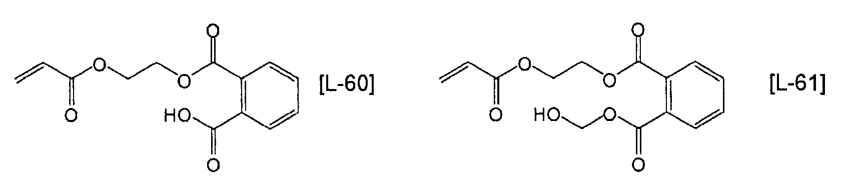

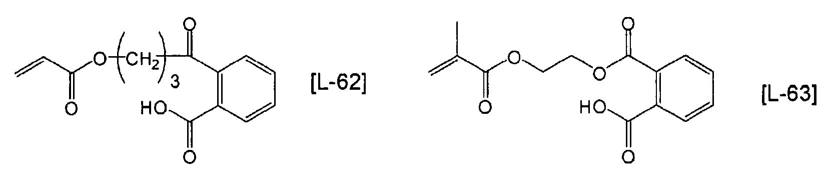

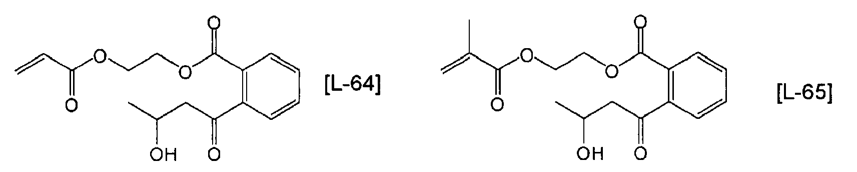

In the present invention, a compound represented by Formula (b-1) is preferably a compound having a phenyl group, more preferably 2-phenoxyethyl (meth)acrylate, benzyl (meth)acrylate, or 2-hydroxy-3-phenoxypropyl acrylate, yet more preferably 2-phenoxyethyl (meth)acrylate, and particularly preferably 2-phenoxyethyl acrylate.

From the viewpoint of inkjet discharge properties and flexibility, the content of Component B is preferably 10 to 60 wt% relative to the weight of the entire ink composition, more preferably 20 to 50 wt%, and yet more preferably 30 to 40 wt%.

### Other monofunctional (meth)acrylate compound

The ink composition used in the present invention may comprise other monofunctional (meth)acrylate compound other than the aromatic hydrocarbon group-containing monofunctional (meth)acrylate compound. Specific examples of the monofunctional (meth)acrylate compound other than the aromatic hydrocarbon group-containing monofunctional (meth)acrylate compound include isoamyl (meth)acrylate, stearyl (meth)acrylate, lauryl (meth)acrylate, octyl (meth)acrylate, isooctyl (meth)acrylate, decyl (meth)acrylate, isomyristyl (meth)acrylate, isostearyl (meth)acrylate, 2-ethylhexyl diglycol (meth)acrylate, 2-hydroxybutyl (meth)acrylate, buthoxyethyl (meth)acrylate, methoxydiethylene glycol (meth)acrylate, cyclictrimethylolpropane formal (meth)acrylate, methoxypolyethylene glycol (meth)acrylate, methoxypropylene glycol (meth)acrylate, tetrahydrofurfuryl (meth)acrylate, isobornyl (meth)acrylate, 2-hydroxyethyl (meth)acrylate, 2-hydroxypropyl (meth)acrylate, 2-(meth)acryloyloxyethylsuccinic acid, 2-(meth)acryloyloxyethyl-2-hydroxyethylphthalic acid, a lactone-modified flexible (meth)acrylate, *t*-butylcyclohexyl (meth)acrylate, 2-(2-ethoxyethoxy)ethyl (meth)acrylate, cyclopentenyl (meth)acrylate, cyclopentenyloxyethyl (meth)acrylate, and dicyclopentanyl (meth)acrylate, etc.

Among them, 2-(2-ethoxyethoxy)ethyl (meth)acrylate is particularly preferable since adhesion is improved.

From the viewpoint of controlling the surface tension at 34 mN/m or greater, the amount of hydrocarbon group-containing monomer such as isoamyl (meth)acrylate, stearyl (meth)acrylate, lauryl (meth)acrylate, octyl (meth)acrylate, isooctyl (meth)acrylate, decyl (meth)acrylate, isomyristyl (meth)acrylate, isostearyl (meth)acrylate, cyclopentenyl (meth)acrylate, cyclopentenyloxyethyl (meth)acrylate, dicyclopentanyl (meth)acrylate, or isobornyl (meth)acrylate used is preferably in a range of more than 0 wt% but no greater than 15 wt% of the entire ink composition.

From the viewpoint of controlling the surface tension at 40 mN/m or less, it is preferable to use a hydroxy group-containing monomer such as 2-hydroxybutyl (meth)acrylate or 2-hydroxy-3-phenoxypropyl (meth)acrylate at a content in a range of more than 0 wt% but no greater than 30 wt%.

From the viewpoint of flexibility, the total content of monofunctional polymerizable compounds including Component A and Component B is preferably at least 25 wt% of the ink composition, more preferably 45 to 80 wt%, and yet more preferably 50 to 70 wt%.

### (Component C) Polyfunctional (meth)acrylate compound

The ink composition used in the present invention preferably comprises (Component C) a polyfunctional (meth)acrylate compound as a polymerizable compound. When the ink composition does not comprise the polyfunctional (meth)acrylate compound, curability is degraded.

Specific examples of Component C include bis(4-(meth)acryloxypolyethoxyphenyl)propane, neopentyl glycol di(meth)acrylate, ethoxylated (2) neopentyl glycol di(meth)acrylate (compound formed by di(meth)acrylating neopentyl glycol ethylene oxide 2 mol adduct), propoxylated (2) neopentyl glycol di(meth)acrylate (compound formed by di(meth)acrylating neopentyl glycol propylene oxide 2 mol adduct), 1,6-hexanediol di(meth)acrylate, 1,9-nonanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, tetrapropylene glycol di(meth)acrylate, polypropylene glycol di(meth)acrylate, pentaerythritol tri(meth)acrylate, pentaerythritol tetra(meth)acrylate, dipentaerythritol tetra(meth)acrylate, trimethylolpropane tri(meth)acrylate, tetramethylolmethane tetra(meth)acrylate, tetramethylolmethane tri(meth)acrylate, dimethyloltricyclodecane di(meth)acrylate, modified glycerol tri(meth)acrylate, modified bisphenol A di(meth)acrylate, bisphenol A PO adduct di(meth)acrylate, bisphenol A EO adduct di(meth)acrylate, dipentaerythritol hexa(meth)acrylate, and caprolactone-modified dipentaerythritol hexa(meth)acrylate.

The ink composition used in the present invention preferably comprises an oligomer as the polyfunctional (meth)acrylate compound.

The 'oligomer' means a polymer having a limited number (preferably 5 to 100) of monomer-based constituent units. A weight-average molecular weight of the oligomer is preferably 400 to 10,000, and more preferably 500 to 5,000.

The oligomer is preferably a compound having a (meth)acryloyl group as a functional group. From the viewpoint of a balance between flexibility and curability, it is preferable for the number of the functional group contained in the oligomer to be 1 to 15 per oligomer molecule, more preferably 2 to 6, yet more preferably 2 to 4, and particularly preferably 2.

Examples of the oligomer in the present invention include a polyester (meth)acrylate-based oligomer, an olefin-based oligomer (an ethylene oligomer, a propylene oligomer, a butene oligomer, etc.), a vinyl-based oligomer (a styrene oligomer, a vinyl alcohol oligomer, a vinylpyrrolidone oligomer, an acrylate oligomer, a methacrylate oligomer, etc.), a diene-based oligomer (a butadiene oligomer, a chloroprene rubber, a pentadiene oligomer, etc.), a ring-opening polymerization type oligomer (di-, tri-, tetra-ethylene glycol, polyethylene glycol, polyethylimine, etc.), an addition-polymerization type oligomer (an oligoester (meth)acrylate, a polyamide oligomer, a polyisocyanate oligomer), an addition-condensation oligomer (a phenolic resin, an amino resin, a xylene resin, a ketone resin, etc.), and amine-modified polyester oligomer, etc. Among these an oligoester (meth)acrylate is preferable, and among them a urethane (meth)acrylate and a polyester (meth)acrylate are more preferable, and a urethane (meth)acrylate is particularly preferable because the ink composition provides excellent curability and adhesion.

With regard to the oligomer, one type thereof may be used on its own or two or more types may be used in combination.

As the urethane (meth)acrylate, an aliphatic urethane (meth)acrylate and an aromatic urethane (meth)acrylate may preferably be cited.

With respect to the oligomer, 'Origomar Handobukku (Oligomer Handbook)' (edited by Junji Furukawa, The Chemical Daily Co., Ltd.) may also be referred to.

Examples of the oligomer based on the urethane (meth)acrylate include U-2PPA, U-4HA, U-6HA, U-6LPA, U-15HA, U-324A, UA-122P, UA5201, UA-512, etc. manufactured by Shin-Nakamura Chemical Co., Ltd.; CN964A85, CN964, CN959, CN962, CN963J85, CN965, CN982B88, CN981, CN983, CN996, CN9002, CN9007, CN9009, CN9010, CN9011, CN9178, CN9788, CN9893 manufactured by Sartomer; EB204, EB230, EB244, EB245, EB270, EB284, EB285, EB810, EB4830, EB4835, EB4858, EB1290, EB210, EB215, EB4827, EB4830, EB4849, EB6700, EB8402, EB8804, EB8800-20R, etc. manufactured by DAICEL-CYTEC COMPANY LTD.

Examples of the amine-modified polyester oligomer include EB524, EB80, EB81 manufactured by DAICEL-CYTEC COMPANY LTD.; CN550, CN501, CN551 manufactured by Sartomer; GENOMER5275 manufactured by RAH N AG.

From the viewpoint of a balance between curability and adhesion, the content of the oligomer is preferably 1 to 10 wt% relative to the total weight of the ink composition, more preferably 2 to 8 wt%, and yet more preferably 3 to 7 wt%.

The content of (Component C) the polyfunctional (meth)acrylate compound is, from the viewpoint of curability and stretchability, preferably no greater than 50 wt% relative to the total weight of the ink composition, more preferably 1 to 50 wt%, yet more preferably 3 to 30 wt%, and particularly preferably 5 to 20 wt%.

The total content of polymerizable compounds in the ink composition is preferably 70 to 99 wt%, and more preferably 80 to 95 wt%.

Furthermore, with regard to the proportions of the contents of Components A to C used in the present invention it is preferable that, relative to the total weight of the ink composition, Component A is 5 to 60 wt%, Component B is 10 to 60 wt%, and Component C is 1 to 50 wt%, and it is more preferable that Component A is 15 to 35 wt%, Component B is 20 to 50 wt%, and Component C is 3 to 30 wt%.

### (Component D) Polymerization initiator

The ink composition used in the present invention preferably comprises (Component D) a polymerization initiator.

Examples of the polymerization initiator include an acylphosphine compound, an aromatic ketone, an aromatic onium salt compound, an organic peroxide, a thio compound, a hexaarylbiimidazole compound, a ketoxime ester compound, a borate compound, an azinium compound, a metallocene compound, an active ester compound, and a compound having a carbon-halogen bond.

Details of the above-mentioned polymerization initiators are known to a person skilled in the art, and are described in for example paragraphs 0090 to 0116 of JP-A-2009-185186.

The ink composition used in the present invention preferably comprises at least one component selected from the group consisting of (Component D-1) an α-aminoalkylphenone compound, (Component D-2) an acylphosphine oxide compound, and (Component D-3) a thioxanthone compound and/or a thiochromanone compound. The ink composition more preferably comprises Component D-2 and Compnent D-3, and yet more preferably all of Components D-1, D-2 and D-3.

Components D-1 to D-3 are described below.

### (Component D-1) α-Aminoalkylphenone compound

The ink composition used in the present invention preferably comprises (Component D-1) an α-aminoalkylphenone compound. By comprising Component D-1, an ink composition having excellent curability is obtained. Component D-1 is preferably a compound represented by Formula (d-1-1).

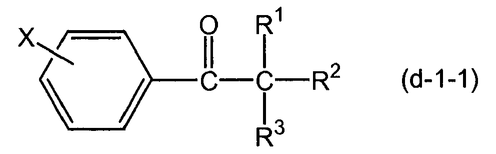

In Formula (d-1-1), R¹, R², and R³ independently denote a hydroxy group, an optionally substituted alkyl group, an optionally substituted alkoxy group, or an optionally substituted amino group, and X denotes a hydrogen atom, an optionally substituted amino group, an optionally substituted alkylthio group, or an optionally substituted alkyl group. At least one of R¹ to R³ is an optionally substituted amino group. When at least one of R¹, R², R³, and X is an amino group, the substituents may be bonded to each other to form a heterocyclic group. Examples of the substituent include an alkyl group having 1 to 10 carbons.

As Component D-1, a compound represented by Formula (d-1-2) or (d-1-3) is preferable.

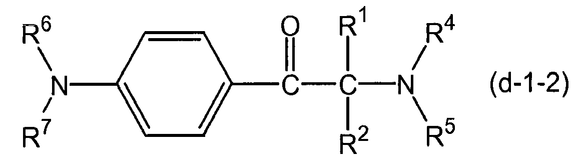

In Formula (d-1-2), R⁴, R⁵, R⁶, and R⁷ independently denote an optionally substituted alkyl group, and at least one of R⁴, R⁵ and R⁶, R⁷ may be bonded to each other to form a heterocyclic group. R¹, R², and the substituent have the same meanings as those for Formula (d-1-1).

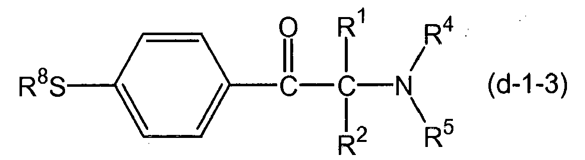

In Formula (d-1-3), R⁸ denotes an optionally substituted alkyl group. R¹, R² and the substituent have the same meaning as R¹, R² and the substituent in Formula (d-1-1), and R⁴ and R⁵ have the same meaning as R⁴ and R⁵ in Formula (d-1-2). The heterocyclic group is not particularly limited and may be selected appropriately. For example, a morpholino group is preferable.

Preferred examples of the α-aminoalkylphenone compound include a commercial product such as IRGACURE 369 and IRGACURE 907 manufactured by Ciba Specialty Chemicals.

From the viewpoint of curability, the content of (Component D-1) the α -aminoalkylphenone compound is preferably 0.1 to 15 wt% relative to the ink composition, more preferably 0.5 to 10 wt%, and yet more preferably 1 to 5 wt%.

### (Component D-2) Acylphosphine compound

The ink composition used in the present invention preferably comprises (Component D-2) an acylphosphine compound.

Preferred examples of (Component D-2) the acylphosphine compound include acylphosphine oxide compounds described in paragraphs 0080 to 0098 of JP-A-2009-096985, and among them a compound having a structure represented by Formula (d-2-1) or (d-2-2) in the molecular structure is more preferable. 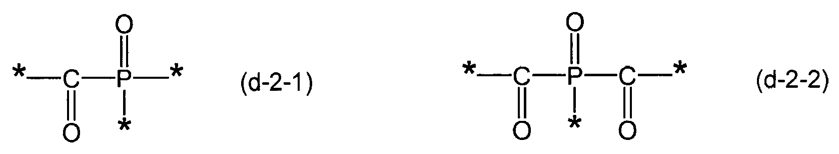 (In Formula, * denotes a bonding position.)

The acylphosphine oxide compound is particularly preferably a compound having a chemical structure represented by Formula (d-2-3) or (d-2-4). 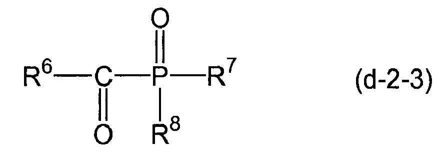 (In Formula (d-2-3), R⁶, R⁷, and R⁸ independently denote an aromatic hydrocarbon group, which may have a methyl group or an ethyl group as a substituent.)

With regard to a monoacylphosphine oxide compound represented by Formula (d-2-3), it is preferable that R⁶ to R⁸ are phenyl groups, which may have a methyl group as a substituent, and it is more preferable that R⁷and R⁸ are phenyl groups and R⁶ is a phenyl group having 1 to 3 methyl groups.

Among them, as the monoacylphosphine oxide compound represented by Formula (d-2-3), 2,4,6-trimethylbenzoyldiphenylphosphine oxide (Darocur TPO manufactured by Ciba Specialty Chemicals, Lucirin TPO manufactured by BASF) is preferable. 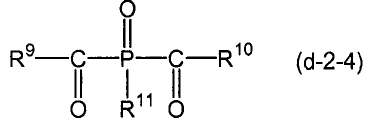 (In Formula (d-2-4), R⁹, R¹⁰ and R¹¹ independently denote an aromatic hydrocarbon group, which may have a methyl group or an ethyl group as a substituent.)

With regard to a bisacylphosphine oxide compound represented by Formula (d-2-4), it is preferable that R⁹ to R¹¹ are phenyl groups, which may have a methyl group as a substituent, and it is more preferable that R¹¹ is a phenyl group and R⁹ and R¹⁰ are phenyl groups having 1 to 3 methyl groups.

Among them, as the bisacylphosphine oxide compound represented by Formula (d-2-4), bis(2,4,6-trimethylbenzoyl)phenylphosphine oxide (IRGACURE 819, manufactured by Ciba Specialty Chemicals) is preferable.

The content of (Component D-2) the acylphosphine compound is, from the viewpoint of curability, preferably in the range of 0.1 to 15 wt% relative to the ink composition, more preferably 0.5 to 10 wt%, yet more preferably 1 to 5 wt%.

### (Component D-3) Thioxanthone compound and/or Thiochromanone compound

The ink composition used in the present invention preferably comprises (Component D-3) a thioxanthone compound and/or a thiochromanone compound. By comprising Component D-3, an ink composition having excellent curability is obtained.

### Thioxanthone compound

The thioxanthone compound is preferably a compound represented by Formula (d-3-1). 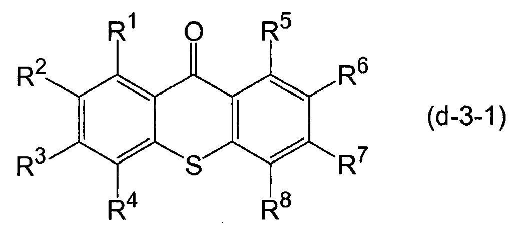 (In Formula (d-3-1), R¹ to R⁸ independently denote a hydrogen atom, an alkyl group, a halogen atom, a hydroxy group, a cyano group, a nitro group, an amino group, an alkylthio group, an alkylamino group (The alkylamino group includes the case of monoalkylsubstituted amino group and dialkylsubstituted amino group.), an alkoxy group, an alkoxycarbonyl group, an acyloxy group, an acyl group, a carboxy group, or a sulfo group.)

The number of carbon atoms of an alkyl moiety in the alkyl group, alkylthio group, alkylamino group, alkoxy group, alkoxycarbonyl group, acyloxy group, and acyl group is preferably 1 to 20, more preferably 1 to 8, and yet more preferably 1 to 4.

Two of R¹ to R⁸ that are adjacent may be joined to each other to form a ring. When they form a ring, examples of the ring structure include a 5- or 6-membered aliphatic or aromatic ring; it may be a heterocyclic ring containing an element other than a carbon atom, and rings thus formed may be further combined to form a bicyclic ring, for example a condensed ring. These ring structures may further have a substituent. Examples of the substituent include a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, and a sulfo group. Examples of a heteroatom when the resulting ring structure is a heterocyclic ring include N, O, and S.

Examples of the thioxanthone compound include thioxanthone, 2-isopropylthioxanthone, 4-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboximide, n-octylthioxanthone-3,4-dicarboxyimide, *N*-(1,1,3,3-tetramethylbutyl)thioxanthone-3,4-dicarboxyimide, 1-phenoxythioxanthone, 6-ethoxycarbonyl-2-m ethoxyth ioxanthone, 6-ethoxycarbonyl-2-methylthioxanthone, thioxanthone-2-polyethylene glycol ester, and 2-hydroxy-3-(3,4-dimethyl-9-oxo-9*H*-thioxanthon-2-yloxy)-*N*,*N*,*N*-trimethyl-1-p ropanaminium chloride. Among them, from the viewpoint of ready availability and curability, 2,4-diethylthioxanthone, 2-isopropylthioxanthone, and 4-isopropylthioxanthone are more preferable. Thiochromanone compound

The thiochromanone compound is preferably a compound represented by Formula (d-3-2).

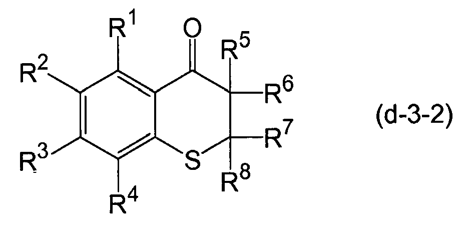

In Formula (d-3-2), R¹, R², R³, R⁴, R⁵, R⁶, R⁷, and R⁸ independently denote a hydrogen atom, an alkyl group, a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, or a sulfo group. The number of carbon atoms of an alkyl moiety of the alkyl group, alkylthio group, alkylamino group, alkoxy group, alkoxycarbonyl group, acyloxy group, and acyl group is preferably 1 to 20, more preferably 1 to 8, and yet more preferably 1 to 4.

Two of R¹, R², R³, and R⁴ that are adjacent may be bonded to each other, for example condensed, to form a ring.

Examples of the ring structure when those above form a ring include a 5 or 6-membered aliphatic ring or aromatic ring; it may be a heterocyclic ring containing an element other than a carbon atom, and rings thus formed may be further combined to form a bicyclic ring, for example a condensed ring. These ring structures may further have a substituent. Examples of the substituent include those described for Formula (d-3-1). Examples of a heteroatom when the resulting ring structure is a heterocyclic ring include N, O, and S.

Furthermore, the thiochromanone compound is preferably a compound having on the thiochromanone ring structure at least one substituent (an alkyl group, a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, or a sulfo group, etc.). As examples of the substituent above, an alkyl group, a halogen atom, a hydroxy group, an alkylthio group, an alkylamino group, an alkoxy group and an acyloxy group are preferable, an alkyl group having 1 to 20 carbons and a halogen atom are more preferable, and an alkyl group having 1 to 4 carbons and a halogen atom are yet more preferable.

Furthermore, the thiochromanone compound is more preferably a compound having at least one substituent on an aromatic ring and at least one substituent on a thiocyclohexenone ring.

The specific examples of the thiochromanone compound preferably include (I-1) to (I-31) listed below. Among them, (I-14), (I-17) and (I-19) are more preferable, and (I-14) is particularly preferable.

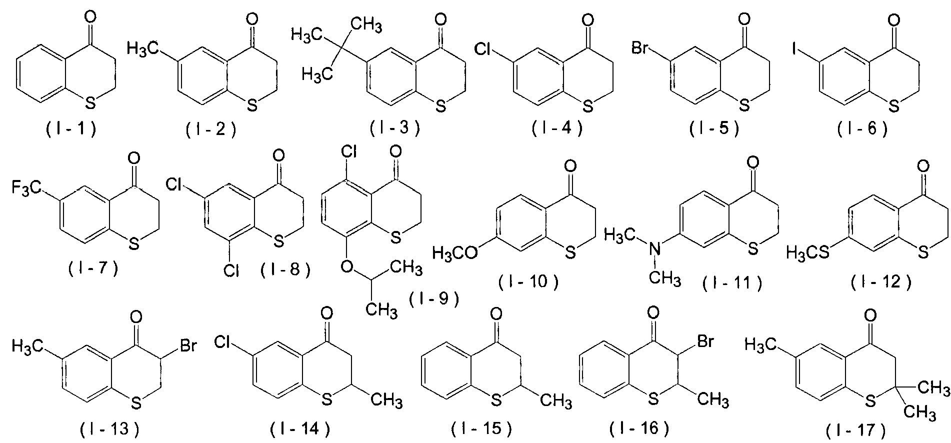

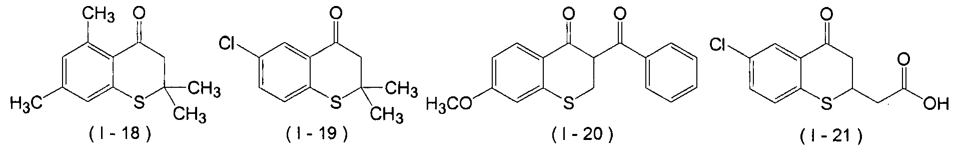

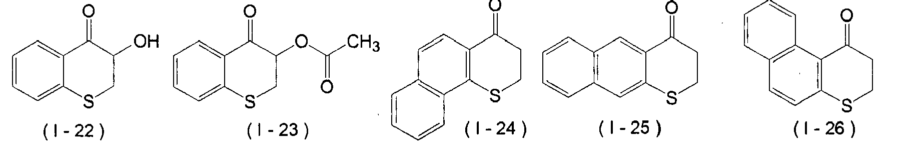

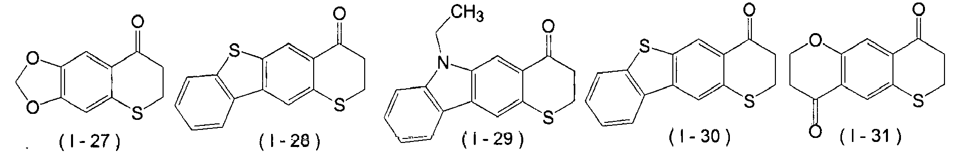

The total content of (Component D-3) the thioxanthone compound and the thiochromanone compound in the ink composition of the present invention is preferably in the range of 0.05 to 10 wt% relative to the ink composition, more preferably 0.5 to 10 wt%, yet more preferably 1 to 8 wt%.

The total content of the polymerization initiator in the ink composition is preferably in the range of 1 to 20 wt% relative to the ink composition, more preferably 3 to 18 wt%, yet more preferably 5 to 15 wt%.

It is preferable for the total content to be in the above-mentioned range, since the ink composition can provide good curability and a uniformly cured film.

In addition, Component D-1 to Component D-3 preferably satisfy the relationship {(total weight of Component D-1 and Component D-2) ≥ (total weight of Component D-3)}. Satisfying the above-mentioned relationship enables an ink composition having excellent curability to be obtained.

In the present invention, from the viewpoint of curability, the {(total weight of Component D-1 and Component D-2):(total weight of Component D-3)} is preferably 20:1 to 1:1, more preferably 20:1 to 1.5:1, and yet more preferably 15:1 to 1.5:1.

### (Component E) Colorant

In the present invention, the ink composition may preferably comprise (Component E) a colorant in order to improve the visibility of a formed image area.

The colorant is not particularly limited, but a pigment and an oil-soluble dye that have excellent weather resistance and rich color reproduction are preferable, and it may be selected from any known coloring agent such as a soluble dye. It is preferable that the colorant does not function as a polymerization inhibitor in a polymerization reaction, which is a curing reaction. This is because the sensitivity of the curing reaction by actinic radiation should not be degraded.

The pigment that can be used in the present invention is not particularly limited and, for example, organic and inorganic pigments having the numbers below described in the Color Index may be used.

That is, as a red or magenta pigment, Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36; as a blue or cyan pigment, Pigment Blue 1, 15, 15:1, 15:2, 15:3, 15:4, 15:6, 16, 17-1, 22, 27, 28, 29, 36, or 60; as a green pigment, Pigment Green 7, 26, 36, or 50; as a yellow pigment, Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193; as a black pigment, Pigment Black 7, 28, or 26; as a white pigment, Pigment White 6, 18, or 21, etc. may be used according to the intended application.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent.

Specific preferred examples of the disperse dye include C. I. Disperse Yellow 5, 42, 54, 64, 79, 82, 83, 93, 99, 100, 119, 122, 124, 126, 160, 184:1, 186, 198, 199, 201, 204, 224, and 237; C. I. Disperse Orange 13, 29, 31:1, 33, 49, 54, 55, 66, 73, 118, 119, and 163; C. I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C. I. Disperse Violet 33; C. I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C. I. Disperse Green 6:1 and 9.

After the colorant is added to the ink composition, the colorant is preferably dispersed in the ink composition to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

In the preparation of an ink composition, the colorant may be added directly to the ink composition together with other components. Furthermore, in order to improve dispersibility it may be added in advance to a solvent or a dispersing medium such as a polymerizable compound used in the present invention, homogeneously dispersed or dissolved, and then added to the ink composition.

In the present invention, in order to avoid the problem of the solvent resistance being degraded when the solvent remains in the cured image and the VOC (Volatile Organic Compound) problem of the residual solvent, it is preferable to add in advance the colorant to the dispersing medium such as the polymerizable compound. As a polymerizable compound used as the dispersing medium of the colorant, it is preferable in terms of dispersion suitability to select a monomer having the lowest viscosity. The colorants may be used by appropriately selecting one type or two or more types thereof according to the intended purpose of the ink composition.

When a colorant such as a pigment that is present as a solid in the ink composition is used, it is preferable for the colorant, the dispersant, the dispersing medium, dispersion conditions, and filtration conditions to be set so that the average particle size of colorant particles is preferably 0.005 to 0.5 µm, more preferably 0.01 to 0.45 µm, and yet more preferably 0.015 to 0.4 µm. It is preferable for the colorant to control its particle size, since clogging of a head nozzle can be suppressed and the storage stability, transparency, and curing sensitivity of the ink composition can be maintained.

The content of the colorant in the ink composition is appropriately selected according to the color and the intended purpose, and is preferably 0.01 to 30 wt% relative to the weight of the entire ink composition.

### (Component F) Polymerization inhibitor

The ink composition used in the present invention preferably comprises (Component F) a polymerization inhibitor from the viewpoint of improving the storage stability.

When the ink composition used in the present invention is used as an inkjet recording ink composition, it is preferably heated in the range of 25°C to 80°C to thus make it less viscous and then discharged, and in order to prevent clogging of a head due to thermal polymerization it is preferable to add a polymerization inhibitor.

Examples of the polymerization inhibitor include a nitroso-based polymerization inhibitor, a hydroquinone, a benzoquinone, p-methoxyphenol, TEMPO, TEMPOL, Al cupferron, and a hindered amine. Among them, a nitroso-based polymerization inhibitor and a hindered amine-based polymerization inhibitor are preferable. Specific examples of the nitroso-based polymerization inhibitor preferably used in the present invention are shown below, but not limited thereto.

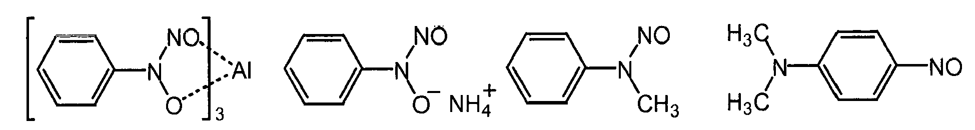

Examples of the nitroso-based polymerization inhibitor include a commercial product such as FIRSTCURE ST-1 manufactured by Chem First.

Examples of the hindered amine-based polymerization inhibitor include a commercial product such as TINUVIN292, TINUVIN770DF, TINUVIN765, and TINUVIN123.

The content of the polymerization inhibitor in the ink composition used in the present invention is preferably in the range of 0.01 to 1.5 wt% relative to the ink composition, more preferably 0.1 to 1.0 wt%, yet more preferably 0.2 to 0.8 wt%. When in the numerical range above, it is possible to suppress polymerization during storage and preparation of the ink composition and prevent clogging of an inkjet head nozzle.

### Other components

The ink composition used in the present invention may comprise as necessary, in addition to the above-mentioned components, a sensitizer, a co-sensitizer, a UV absorber, an antioxidant, an antifading agent, a conductive salt, a solvent, a polymer compound, a basic compound, a surfactant, a leveling additive, a matting agent and, for adjusting film physical properties, a polyester resin, polyurethane resin, vinyl resin, acrylic resin, rubber resin, or wax, etc. They are described in JP-A-2009-185186 and may be used in the present invention as well.

The ink composition used in the present invention preferably comprises a dispersant. Especially, when the pigment is used, the ink composition preferably comprises a dispersant in order to stably disperse the pigment in the ink composition.

As the dispersant, a polymeric dispersant is preferable. The 'polymeric dispersant' referred to in the present invention means a dispersant having a weight-average molecular weight of 1,000 or greater.

The content of the dispersant in the ink composition of the present invention is appropriately selected according to the intended purpose, and is preferably 0.05 to 15 wt% relative to the weight of the entire ink composition.

It is preferable that the ink composition used in the present invention comprises neither a silicone-based surfactant nor a fluorine-based surfactant or comprises a total content of silicone-based and fluorine-based surfactants of no greater than 0.01 wt% relative to the total weight of the ink composition. It is more preferable that the ink composition comprises neither a silicone-based surfactant nor a fluorine-based surfactant or comprises the total content of the both surfactants of no greater than 0.005 wt%, and particularly preferable that the ink composition comprises neither a silicone-based surfactant nor a fluorine-based surfactant.

When in the above-mentioned range, it is easy to control a surface tension of the ink composition at 25°C in the range of 36.0 to 40.0 mN/m.

As a surfactant other than a silicone-based and a fluorine-based surfactants, those described in JP-A-62-173463 and JP-A-62-183457 can be cited. Examples thereof include an anionic surfactant such as a dialkyl sulfosuccinate salt, an alkylnaphthalene sulfonic acid salt, or a fatty acid salt, a nonionic surfactant such as a polyoxyethylene alkyl ether, a polyoxyethylene alkyl allyl ether, an acetylene glycol, or a polyoxyethylene-polyoxypropylene block copolymer, and a cationic surfactant such as an alkylamine salt or a quaternary ammonium salt.

### Properties of ink

While taking into consideration dischargeability, the ink composition used in the present invention has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition used in the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, and uncured monomer can be reduced. Furthermore, ink spreading when ink droplets have landed can be suppressed, and as a result there is the advantage that the image quality is improved.

The surface tension at 25°C of the ink composition that can be used in the present invention is 36,0 mN/m to 40.0 mN/m. When the surface tension is less than 36,0 mN/m or greater than 40.0 mN/m, depending on the combination of the amount of ink discharged and an inkjet head with a nozzle plate treated so as to have affinity for an ink, dot dropout or ink scattering frequently occurs, a high definition image cannot be obtained, and the discharge stability is poor.

Furthermore, the surface tension at 25°C of the ink composition is preferably 36 to 39 mN/m. When in the above-mentioned range, and combined with an inkjet head with a nozzle plate treated so as to have affinity for an ink, an ink composition having excellent discharge stability can be obtained.

Furthermore, when recording is carried out on various recording media such as polyolefin, polyethylene terephthalate (PET), coated paper, and non-coated paper, from the viewpoint of spreading and penetration it is at least 36,0 mN/m, and from the viewpoint of wettability it is preferably no greater than 39 mN/m.

The surface tension is measured by the Wilhelmy method using a normal surface tensiometer (e.g. a CBVP-Z surface tensiometer manufactured by Kyowa Interface Science Co., Ltd., etc.) at a liquid temperature of 25°C.

In the present invention, 'being treated so as to have affinity for an ink' means subjecting a nozzle plate of an inkjet head to a treatment that makes it compatible with an ink.

'Being treated so as to have affinity for an ink' is a treatment that increases affinity for an ink, and it can be evaluated by ink wettability on a nozzle plate. In more detail, wettability may be evaluated by carrying out a wettability test employing the contact angle of the ink used relative to the nozzle plate surface. A preferred range may be defined for the contact angle relative to the surface of the nozzle plate treated so as to have affinity for an ink.

The 'ink affinity' of the nozzle plate and the 'hydrophilicity/hydrophobicity' of the ink have close relationship, and a nozzle plate having ink affinity for a hydrophobic ink has hydrophobic properties.

In the inkjet recording method of the present invention, a hydrophobic ink composition, which is generally called an oil-based ink in the present field, is preferably used, and a radiation-curing ink composition comprising an ethylenically unsaturated compound, that is, a UV ink, is preferably used.

### II. Inkjet recording method

The inkjet recording method of the present invention comprises an image formation step (hereinafter, also called 'step (a)') of forming an image on a recording medium by discharging an ink composition comprising a polymerizable compound and a polymerization initiator and having a surface tension at 25°C of 36,0 to 40.0 mN/m using an inkjet head having a nozzle plate with a face on the ink discharge side treated so as to have affinity for an ink, and a curing step (hereinafter, also called 'step (b)') of curing the ink composition by irradiating the discharged ink composition with actinic radiation.

The inkjet recording method of the present invention is a method, comprising step (a) and step (b), for forming an image by means of an ink composition cured above the recording medium.

### Step (a): Image formation step

The image formation step of forming an image on a recording medium by discharging an ink composition comprising a polymerizable compound and a polymerization initiator and having a surface tension at 25°C of 36.0 to 40.0 mN/m using an inkjet head having a nozzle plate with face on the ink discharge side treated so as to have affinity for an ink is first explained.

The recording medium used in the present invention is not particularly limited, and a known recording medium may be used. Examples thereof include paper, paper laminated with a plastic (e.g. polyethylene, polypropylene, polystyrene, etc.), a metal plate (e.g. aluminum, zinc, copper, etc.), a plastic film (e.g. polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal.

In the present invention, as the recording medium, a non-absorbing recording medium is preferable and among them a plastic film and a paper are more preferable.

An inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink composition supply tank immediately before an inkjet head, a filter, and a piezo system inkjet head.

The inkjet head used in the inkjet recording method of the present invention is an inkjet head having a nozzle plate with a face on the ink discharge side treated so as to have affinity for an ink.

As the inkjet head having a nozzle plate with a face on the ink discharge side treated so as to have affinity for an ink, for example, an on-demand inkjet head of a piezo drive system manufactured by FUJIFILM Dimatix, Inc. can be cited. Specific examples thereof include S-class and Q-class Sapphire.

The shape of the nozzle, as shown in FIG. 1, is preferably one in which a discharge aperture 102 does not project from a face on the ink discharge side of a nozzle plate 100, and is more preferably a nozzle formed by providing a through hole in a plate-shaped member. Examples of the shape of the nozzle opening include a rounded polygon, a circle, an elliptical shape, a rectangle, and a polygon, and among them a rounded polygon, a circle, and a polygon are preferable. Moreover, the cross-sectional shape of the through hole, which is the nozzle, is preferably a tapered shape in which it narrows in going toward the ink discharge aperture as shown in FIG. 1.

The nozzle plate is a nozzle plate with a face on the ink discharge side treated so as to have affinity for an ink, may be one in which at least part of the face on the ink discharge side has been treated so as to have affinity for an ink, and is preferably one in which the entire face on the ink discharge side has been treated so as to have affinity for an ink.

Here, the contact angle of the ink composition of the present invention relative to the surface of the nozzle plate treated so as to have affinity for an ink is preferably no greater than 90°, more preferably no greater than 85°, and yet more preferably no greater than 80°. It is preferable for it to be in the above-mentioned numerical range since stable discharge is achieved.

The contact angle relative to the surface of the nozzle plate is measured in accordance with a method prescribed in 'Test method for wettability of a glass substrate' (JIS R3257) except that the glass substrate is changed to a nozzle plate, and pure water is changed to the ink composition in the present invention.

The contact angle in the present invention is a value measured in accordance with a JIS Standard of the Japanese Standards Association, and is specifically a value measured in accordance with a method described in '6. Sessile drop method' within 'Test method for wettability of a glass substrate' of JIS R3257. More specifically, it is a value measured by a method in which a contact angle measurement instrument ((CA-A) contact angle meter manufactured by Kyowa Interface Science Co., Ltd.) is used, a liquid droplet is formed by discharging an ink composition liquid droplet from a needle tip and contacting it with a face of the nozzle plate that has been treated so as to have affinity for an ink, it is allowed to stand for 10 seconds, the shape of the liquid droplet is observed through a viewing hole of the contact angle needle, and the contact angle at 25°C is determined.

As a method for ink affinity treatment, there can be cited a method in which at least one non-ink repelling layer is formed on at least part of the surface of a nozzle plate.

Specifically, the nozzle plate preferably comprises, on at least part of the face on the ink discharge side, a layer formed from at least one type selected from diamond-like carbon, a metal, a semimetal oxide, a metal oxide, a semimetal nitride, and a metal nitride. The semimetal referred to here includes metalloids such as silicon, germanium, arsenic, antimony, and bismuth, and among them silicon is preferable. As the metal, gold, stainless steel, iron, titanium, tantalum, platinum, rhodium, nickel, chromium, etc. are preferable, and gold and iron are more preferable. As the semimetal oxide, silicon oxide is preferable. As the metal oxide, aluminum oxide is preferable. As the semimetal nitride, silicon nitride is preferable. As the metal nitride, aluminum nitride is preferable.

In the present invention, the nozzle plate preferably comprises, on at least part of the face on the ink discharge side, a layer formed from at least one type selected from the group consisting of gold, stainless steel, iron, titanium, tantalum, platinum, rhodium, nickel, chromium, silicon oxide, silicon nitride, and aluminum nitride, more preferably a layer formed from at least one type selected from the group consisting of gold, stainless steel, iron, titanium, silicon oxide, silicon nitride, and aluminum nitride, yet more preferably a layer formed from at least one type selected from the group consisting of gold, stainless steel, and silicon oxide, particularly preferably a layer formed from at least one type selected from the group consisting of gold and silicon oxide, and most preferably a layer formed from gold.

As the method for ink affinity treatment, a known method may be used, and examples thereof include, but are not limited to, (1) a method in which a silicon oxide film is formed by thermally oxidizing the surface of a nozzle plate made of silicon, (2) a method in which an oxide film of silicon or a material other than silicon is oxidatively formed or a method in which it is formed by sputtering, and (3) a method in which a metal film is formed. Details of these methods may be referred to in US Pat. Application No. 2010/0141709. Methods (1) to (3) for ink affinity treatment are explained below, but they should not be construed as being limited thereto.

Method (1) in which a silicon oxide film is formed by thermally oxidizing the surface of a nozzle plate made of silicon is now explained.

As shown in FIG. 1, a silicon oxide film 101 is formed by thermal oxidization on the entire nozzle plate 100. The silicon oxide film 101 may be formed on a face on the ink discharge side, and may be formed on at least part of an area around the discharge aperture 102, the face on the ink discharge side 103, and an inner wall of the discharge aperture 102.

As shown in FIG. 2, when a nozzle edge 104 is rounded, the silicon oxide film 101 may be removed using, for example, hydrofluoric acid. It is preferable to round the nozzle edge since stable discharge is achieved. In this case, by thermally oxidizing the nozzle plate again after the silicon oxide film is removed, a silicon oxide film is formed again. Furthermore, in order to round the sharp edge part, a nozzle plate made of silicon may be immersed in an etching liquid (e.g. a KOH aqueous solution) for a required time.

The silicon oxide film 101 is formed by thermally treating the surface of the nozzle plate 100 at a temperature of 800°C to 1,200°C.

The thickness of the silicon oxide film 101 is preferably at least 0.5 µm, more preferably at least 1 µm, yet more preferably 1 to 10 µm, and particularly preferably 2 to 5 µm.

Method (2) in which an oxide film of silicon or a material other than silicon is oxidatively formed or is formed by sputtering is now explained.

FIG. 3 shows an example in which after a silicon oxide film is removed, a protective layer 105 is formed on a nozzle plate surface. From the viewpoint of preventing damage during maintenance or during operation of inkjet recording equipment, the protective layer 105 is preferably one having higher durability and higher strength than a layer of a semiconductor such as silicon.

As the protective layer, an inorganic material and a nonmetal material can be cited, and examples thereof include an oxide, diamond-like carbon, and a nitride (silicon nitride, aluminum nitride).

The protective layer 105 is preferably silicon nitride. A silicon nitride formed at a high temperature of at least 1,000°C is particularly preferable since it has excellent durability and weatherability compared with silicon or silicon oxide. A nitride film formed at high temperature is preferable since it has sufficient thickness and few pinholes.

Since a nitride has excellent durability compared with an oxide, it can be made into a thinner form. Specifically, the thickness of a nitride is preferably no greater than 0.5 µm, and more preferably 0.05 to 0.2 µm.

As necessary, silicon nitride may be formed at low temperature (e.g. 350°C to 1,000°C). For example, when the nozzle plate is connected to a heat-sensitive part such as a piezoelectric actuator whose physical properties change when heated at for example the Curie temperature or higher, it is necessary to form it at low temperature.

The material forming the protective layer 105 may be selected from the viewpoint of chemical durability toward a liquid that is discharged. When the protective layer 105 does not react with a liquid that is discharged, it can be said that it is chemically highly durable. That is, it is preferable that the protective layer 105 is not damaged, corroded, or decomposed by the liquid that is discharged. Furthermore, the protective layer 105 may be selected from the viewpoint of durability toward a maintenance operation. A protective layer 105 free from pinholes exhibits protection from a liquid such as an alkaline ink composition that corrodes a semiconductor.

The thickness of the protective layer 105 is preferably at least 10 nm, and more preferably 10 nm to 20 µm.

In order to suppress the occurrence of an electric field due to static electricity on the surface of the nozzle plate 100, the protective layer 105 may comprise a conductive material (made of a nonmetal or a metal). For example, a conductive material may be grounded. A conductive material is also used for improving Galvanic compatibility of a printer head. As the conductive material, an oxide can be cited, and a tin oxide (ITO) doped with cesium or lead is preferable.

Method (3) in which a metal film is formed is now explained.

The protective layer 105 in (2) above may be a metal layer. A metal layer is preferable since it has higher durability than a semiconductor material (silicon, etc.). As a metal used in the metal layer, for example, titanium, tantalum, platinum, rhodium, gold, nickel, chromium, and a combination thereof can be cited. The metal layer is preferably formed on a face on the ink discharge side.

As shown in FIG. 4, when a metal layer (106, 107) is formed by sputtering, etc., the metal layer 107 within the nozzle might be formed thinner than the metal layer 106 on the nozzle plate surface on the face on the ink discharge side. In this case, in order to make the thickness of the metal layer (106, 107) uniform, there is a method in which the metal layer 107 (e.g. about 200 A or greater) within the nozzle is further subjected to sputtering or a second metal layer is formed on the metal layer 107 (e.g. one of 980 nm or greater) within the nozzle by electroplating.

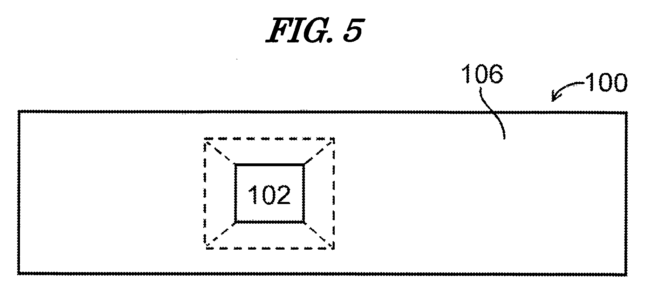

FIG. 4 and FIG. 5 show examples in which a metal layer 106 is formed on the discharge aperture 102 and the face 103 on the ink discharge side of the nozzle plate. A metal oxide layer might be naturally formed on the surface of the metal layer, but the thickness of this metal oxide layer is on the order of angstroms, and in terms of accomplishing the object of the present invention it can be considered to be a metal layer. For some metals, for example titanium, a metal oxide layer is inactive, and this is preferable since durability toward a liquid that is discharged might increase.

Preferred examples of chemically highly durable metals include titanium, gold, platinum, rhodium, and tantalum. It is preferable to use a titanium or tantalum metal layer since it has high durability toward an alkaline liquid and prevents corrosion of a discharge aperture of a nozzle plate made of silicon.

The thickness of the metal layer is preferably at least 0.1 µm, more preferably 0.2 to 5 µm, and yet more preferably 2 to 2.5 µm. From the viewpoint of durability, the metal layer is preferably at least 1 µm, and more preferably 1 to 10 µm. When a metal layer is formed, the nozzle plate can become conductive. When the durability of the metal layer within the nozzle is increased, the metal layer may be subjected to vacuum vapor deposition (e.g. sputtering) or vacuum vapor deposition and electroplating.

With regard to a nonmetal layer and a metal layer, in the case of CVD such as PVD or PECVD, or thermal oxide, formation is by thermal growth. Furthermore, when a nonmetal layer and a metal layer are formed after removing an oxide layer, they may be formed at the same thickness as the removed oxide layer or a thickness smaller or larger than that. For example, the thickness of the nonmetal layer and metal layer is preferably at least 0.1 µm, and more preferably 0.5 to 20 µm.

In the present invention, the volume of an ink composition discharged by an inkjet head with a nozzle plate treated so as to have affinity for an ink is preferably 1 to 100 pL, more preferably 3 to 50 pL, and yet more preferably 10 to 30 pL. When the ink composition of the present invention is used, since the thickness of an ink liquid film on the nozzle plate surface is appropriately controlled, excellent discharge stability can be achieved even with the ink composition having a small volume in the above-mentioned range.

Furthermore, the inkjet head is driven preferably so as to discharge at a resolution of 300 x 300 to 4,000 x 4,000 dpi, and more preferably 400 x 400 to 1,600 x 1,600 dpi. In the present invention dpi denotes the number of dots per 2.54 cm.

The inkjet head preferably has a productivity of at least 200 ng*kHz.

The productivity is calculated from weight per dot of ink composition x number of nozzles x frequency, and means the weight of an ink composition discharged per second.

Since the ink composition used in the present invention has high curing sensitivity and can be cured in a short period of time, even when an image formation apparatus having a productivity of at least 200 ng*kHz is used, an image can be formed without degrading image quality. The productivity is more preferably 200 to 800 ng*kHz, and yet more preferably 300 to 600 ng*kHz.

The frequency is preferably 0.5 to 80 kHz, more preferably 1 to 60 kHz, and yet more preferably 1 to 50 kHz.

The number of nozzles formed in one nozzle plate is preferably 10 to 500, more preferably 50 to 400, and yet more preferably 100 to 300.

Furthermore, it is preferable to adjust the frequency according to the volume of a discharged ink composition. Specifically, when the volume of the ink composition is 1 to 10 pL, the frequency is preferably at least 50 kHz.

When the volume of the ink composition exceeds 10 pL but is no greater than 20 pL, the frequency is preferably at least 25 kHz but less than 50 kHz.

When the volume of the ink composition exceeds 20 pL but is no greater than 30 pL, the frequency is preferably at least 16 kHz but less than 25 kHz.

In the present invention, since it is preferable for the ink composition to be discharged at a constant temperature, an image forming equipment that a section from the ink composition supply tank to the inkjet head can be thermally insulated and heated is preferably used. A method of controlling temperature is not particularly limited, but it is preferable to provide, for example, temperature sensors at a plurality of pipe section positions, and control heating according to the ink composition flow rate and the temperature of the surroundings. The temperature sensors may be provided on the ink composition supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

A radiation curing type ink composition such as the ink composition used in the present invention generally has higher viscosity than that of a water-based ink composition used for a normal inkjet recording ink composition, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the ink composition temperature is preferably ±5°C of a set temperature, more preferably ±2°C of the set temperature, and yet more preferably ±1°C of the set temperature.

### Step(b): Curing step

The step (b) is explained.

The ink composition discharged onto the support cures upon exposure to actinic radiation. This is due to a initiating species such as a radical being generated by decomposition of the polymerization initiator contained in the ink composition of the present invention by irradiation with actinic radiation, the initiating species functioning so as to make a polymerization reaction of a polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizer, the peak wavelength of the actinic radiation is, for example, preferably 200 to 600 nm, more preferably 300 to 450 nm, and yet more preferably 350 to 420 nm.

Furthermore, the photopolymerization initiation system in the present invention has sufficient sensitivity for low output actinic radiation. The actinic radiation for curing is applied therefore so that the illumination intensity on the exposed surface is, preferably 100 to 3,000 mW/cm², and more preferably 500 to 2,000 mW/cm².

As an actinic radiation source, a mercury lamp, a gas/solid laser, etc. are mainly used, and for UV photocuring an inkjet recording ink composition a mercury lamp and a metal halide lamp are widely known. However, from the viewpoint of protection of the environment, there has recently been a strong desire for mercury not to be used, and replacement by a GaN-based semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another violet LED is available, and irradiation can be carried out with radiation of a different UV bandwidth. The actinic radiation source in the present invention is preferably a UV-LED, and a UV-LED having a peak wavelength at 350 to 420 nm is particularly preferable.

The ink composition used in the present invention is desirably exposed to such actinic radiation for preferably 0.01 to 120 s., more preferably 0.01 to 90 s., and yet more preferably 0.01 to 10 s.

And in the inkjet recording method of the present invention, it is desirable for the ink composition to be cured by irradiated for 0.01 to 10 s. with actinic radiation and with no greater than 2,000 mW/cm² of illumination intensity after discharging the ink composition.

Irradiation conditions and a basic method for irradiation with actinic radiation are disclosed in JP-A-60-132767. Specifically, a light source is provided on either side of a head unit that includes an ink composition discharge device, and the head unit and the light source are made to scan by a so-called shuttle system. Irradiation with actinic radiation is carried out after a certain time (preferably 0.01 to 0.5 s., more preferably 0.01 to 0.3 s., and yet more preferably 0.01 to 0.15 s.) has elapsed from when the ink composition has landed. By controlling the time from ink composition landing to irradiation so as to be a minimum in this way, it becomes possible to prevent the ink composition that has landed on a support from spreading before being cured. Furthermore, since the ink composition can be exposed before it reaches a deep area of a porous support that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light. Such curing method above may also be applied to the inkjet recording method of the present invention.

By employing such an inkjet recording method as described above, it is possible to maintain a uniform dot diameter for landed ink composition even for various types of support having different surface wettability, thereby improving the image quality. In order to obtain a color image, it is preferable to superimpose colors in order from those with a high lightness. By superimposing inks in order from one with high lightness, it is easy for radiation to reach a lower ink composition, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

The inkjet recording method of the present invention may suitably employ the ink set comprising two or more ink compositions. The order in which colored ink compositions are discharged is not particularly limited, but it is preferable to apply to a recording medium from a colored ink composition having a high lightness; when the ink compositions of yellow, cyan, magenta, and black are used, they are preferably applied on top of the support in the order yellow cyan → magenta → black. Furthermore, when white is additionally used, they are preferably applied on top of the recording medium in the order white → yellow cyan → magenta → black. Moreover, the present invention is not limited thereto, and an ink set comprising a total of seven colors, that is, light cyan, light magenta ink compositions and cyan, magenta, black, white, and yellow dark ink compositions may preferably be used, and in this case they are applied on top of the support in the order white → light cyan → light magenta → yellow cyan → magenta → black.

In this way, the ink composition used in the present invention may be cured by irradiation with actinic radiation in high sensitivity and form an image on the surface of the support.

In order to obtain a full color image, it is preferable to use, as the ink set, an ink set comprising at least four dark ink compositions of yellow, cyan, magenta, and black, it is more preferable to use an ink set comprising in combination five dark ink compositions of yellow, cyan, magenta, black, and white, and it is yet more preferable to use an ink set comprising in combination five dark ink compositions of yellow, cyan, magenta, black, and white and light ink compositions selected from the group consisting of light cyan, light magenta, and gray (light black) ink compositions.

The 'dark ink composition' referred to in the present invention means an ink composition for which the content of the colorant exceeds 1 wt% of the entire ink composition. Furthermore, an ink composition for which the content of the colorant is no greater than 1 wt% of the entire ink composition is called a 'light ink composition'. The colorant is not particularly limited; a known colorant may be used, and examples thereof include a pigment and a disperse dye.

The ink set that can be used in the present invention may comprise at least one dark ink composition and at least one light ink composition. The dark ink composition and the light ink composition employ colorants of similar colors, the ratio of the colorant concentration of the dark ink composition to the colorant concentration of the light ink composition is preferably dark ink composition:light ink composition = 15:1 to 4:1, more preferably 12:1 to 4:1, and yet more preferably 10:1 to 4.5:1. When the ratio is in the above-mentioned range, a vivid full color image with little feeling of grain can be obtained.

In accordance with the present invention, there can be provided an inkjet recording method that exhibits high discharge stability and can give a high definition image even when an inkjet head with high productivity and an ink composition having high radiation curability are used.

### EXAMPLES

The present invention is explained below more specifically by reference to Examples and Comparative Examples. However, the present invention should not be construed as being limited by these Examples. 'Parts' in the description below means 'parts by weight' and '%' means 'wt%' unless otherwise specified.

### Preparation of yellow mill base

| | |
|---|---|
| Yellow pigment: NOVOPERM ® YELLOW H2G (Clariant) 30 parts by weight SR9003 (propoxylated (2) neopentyl glycol diacrylate (compound obtained by diacrylating 2 mole propylene oxide adduct of neopentyl glycol), SARTOMER®) | 30 parts by weight |
| BYK168 (dispersant, BYK Chemie) | 40 parts by weight |

The above components were stirred to give a yellow mill base. Preparation of a pigment mill base was carried out by placing them in an M50 disperser motor mill (Eiger Machinery, Inc.) and dispersing using zirconia beads having a diameter of 0.65 mm at a peripheral speed of 9 m/s for 8 hours.

### Preparation of magenta mill base

| | |
|---|---|
| Magenta pigment: CINQUASIA® MAGENTA RT-355D (Ciba Specialty Chemicals) | 30 parts by weight |
| SR9003 | 30 parts by weight |
| BYK168 | 40 parts by weight |

The above components were stirred under the same dispersion conditions as for preparation of the yellow mill base, thus giving a magenta mill base.

### Preparation of cyan mill base

| | |
|---|---|
| Cyan pigment: IRGALITE® BLUE GLVO (Ciba Specialty Chemicals) | 30 parts by weight |
| SR9003 | 30 parts by weight |
| BYK168 | 40 parts by weight |

The above components were stirred under the same dispersion conditions as for preparation of the yellow mill base, thus giving a cyan mill base.

### Preparation of black mill base

| | |
|---|---|
| Black pigment: SPECIAL BLACK 250 (Ciba Specialty Chemicals) | 30 parts by weight |
| SR9003 | 30 parts by weight |
| BYK168 | 40 parts by weight |

The above components were stirred under the same dispersion conditions as for preparation of the yellow mill base, thus giving a black mill base.

### Examples 1 to 17 and Comparative Examples 1 to 8

### Method for preparing ink composition

Each of the ink compositions was obtained by mixing and stirring the materials described in Table 1 and Table 2. The numerical values in the tables denote the amount (parts by weight) of each of the components added.

The surface tension was measured by the Wilhelmy method using a normal surface tensiometer (e.g. a CBVP-Z surface tensiometer manufactured by Kyowa Interface Science Co., Ltd., etc.) at a liquid temperature of 25°C.

### Inkjet recording method

An ink composition was fired as droplets onto a sheet made of polyvinyl chloride and irradiated by transporting at a specific speed under a UV light-emitting diode (UV-LED) beam to thus cure the ink composition, thereby giving a printed material.

In the present Examples, discharge of the ink composition was carried out by inkjet recording equipment having a piezo drive system inkjet head. The light-emitting diode (UV-LED) for curing employed an NC4U134 manufactured by Nichia Corporation. The above LED outputs UV light having a wavelength of 365 nm from 1 chip, and the illumination intensity on the surface can be adjusted so as to be in the range of 50 to 2,000 mW/cm² by controlling the current level (focusing using lens). In the present Examples, exposure was carried out about 0.5 seconds after landing.

### Evaluation of discharge stability (10 pL)

After the ink composition obtained was stored at room temperature for two weeks, recording on a recording medium was carried out using inkjet recording equipment having a Q-class Sapphire QS-256/10 inkjet head with a nozzle plate treated so as to have affinity for an ink (FUJIFILM Dimatix, Inc., number of nozzles 256, liquid droplet volume 10 pL, 50 kHz, ink affinity treatment: silicon oxide) with the discharged liquid droplets fixed at 10 pL, and the presence or absence of dot dropouts and ink scattering was visually examined when printing was carried out continuously at normal temperature (25°C) for 3 hours and evaluated using the criteria below.
Excellent: no occurrence of dot dropouts or ink scattering
Good: 1 to 3 occurrences of dot dropouts or ink scattering
Fair: 4 to 10 occurrences of dot dropouts or ink scattering
Poor: 11 or more occurrences of dot dropouts or ink scattering

### Evaluation-1 of discharged stability (30 pL)

After the ink composition obtained was stored at room temperature for two weeks, recording on a recording medium was carried out using inkjet recording equipment having a Q-class Sapphire QS-256/30 inkjet head with a nozzle plate treated so as to have affinity for an ink (FUJIFILM Dimatix, Inc., number of nozzles 256, liquid droplet volume 30 pL, 16 kHz, ink affinity treatment: silicon oxide) with the discharged liquid droplets fixed at 30 pL, and the presence or absence of dot dropouts and ink scattering was visually examined when printing was carried out continuously at normal temperature (25°C) for 3 hours and evaluated using the criteria below.
Excellent: no occurrence of dot dropouts or ink scattering
Good: 1 to 3 occurrences of dot dropouts or ink scattering
Fair: 4 to 10 occurrences of dot dropouts or ink scattering
Poor: 11 or more occurrences of dot dropouts or ink scattering

### Evaluation-2 of discharged stability (30 pL)

After the ink composition obtained was stored at room temperature for two weeks, recording on a recording medium was carried out using inkjet recording equipment having a Spectra® SE-128 AA inkjet head with a nozzle plate treated so as to have affinity for an ink (FUJIFILM Dimatix, Inc., number of nozzles 128, liquid droplet volume 30 pL, 40 kHz, ink affinity treatment: gold) with the discharged liquid droplets fixed at 30 pL, the head temperature was adjusted so as to give an ink viscosity of 9 cP (Pa·s), and the presence or absence of dot dropouts and ink scattering was visually examined when printing was carried out continuously for 1 hour and evaluated using the criteria below.
Excellent: no occurrence of dot dropouts or ink scattering
Good: 1 to 3 occurrences of dot dropouts or ink scattering
Fair: 4 to 10 occurrences of dot dropouts or ink scattering
Poor: 11 or more occurrences of dot dropouts or ink scattering

### Evaluation of discharge stability (28 pL)

After the ink composition obtained was stored at room temperature for two weeks, recording on a recording medium was carried out using inkjet recording equipment having a Spectra Galaxy PH inkjet head with a nozzle plate treated so as to have affinity for an ink (FUJIFILM Dimatix, Inc., number of nozzles 256, liquid droplet volume 28 pL, 20 kHz, ink affinity treatment: stainless steel) with the discharged liquid droplets fixed at 28 pL, the head temperature was adjusted so as to give an ink viscosity of 9 cP, and the presence or absence of dot dropouts and ink scattering was visually examined when printing was carried out continuously for 1 hour and evaluated using the criteria below.
Excellent: no occurrence of dot dropouts or ink scattering
Good: 1 to 3 occurrences of dot dropouts or ink scattering
Fair: 4 to 10 occurrences of dot dropouts or ink scattering
Poor: 11 or more occurrences of dot dropouts or ink scattering

### Evaluation of curability

Curing sensitivity was defined as the exposure energy at which tackiness of the surface after printing disappeared.

The illumination intensity was fixed at 1,000 mW/cm², and the exposure time (s) was adjusted so as to give an exposure energy of 700 (mJ/cm²).

The presence or absence of tackiness of the surface after printing was determined by pressing plain paper (Photocopy paper C2, manufactured by Fuji Xerox Co., Ltd.) there against immediately after printing; tackiness was present when color transferred, and when there was no transfer of color tackiness was absent. Evaluation was carried out using the criteria below.
Excellent: no transfer or tackiness
Good: no transfer, and hardly any tackiness
Fair: slight transfer and slight tackiness
Poor: transferred and tacky

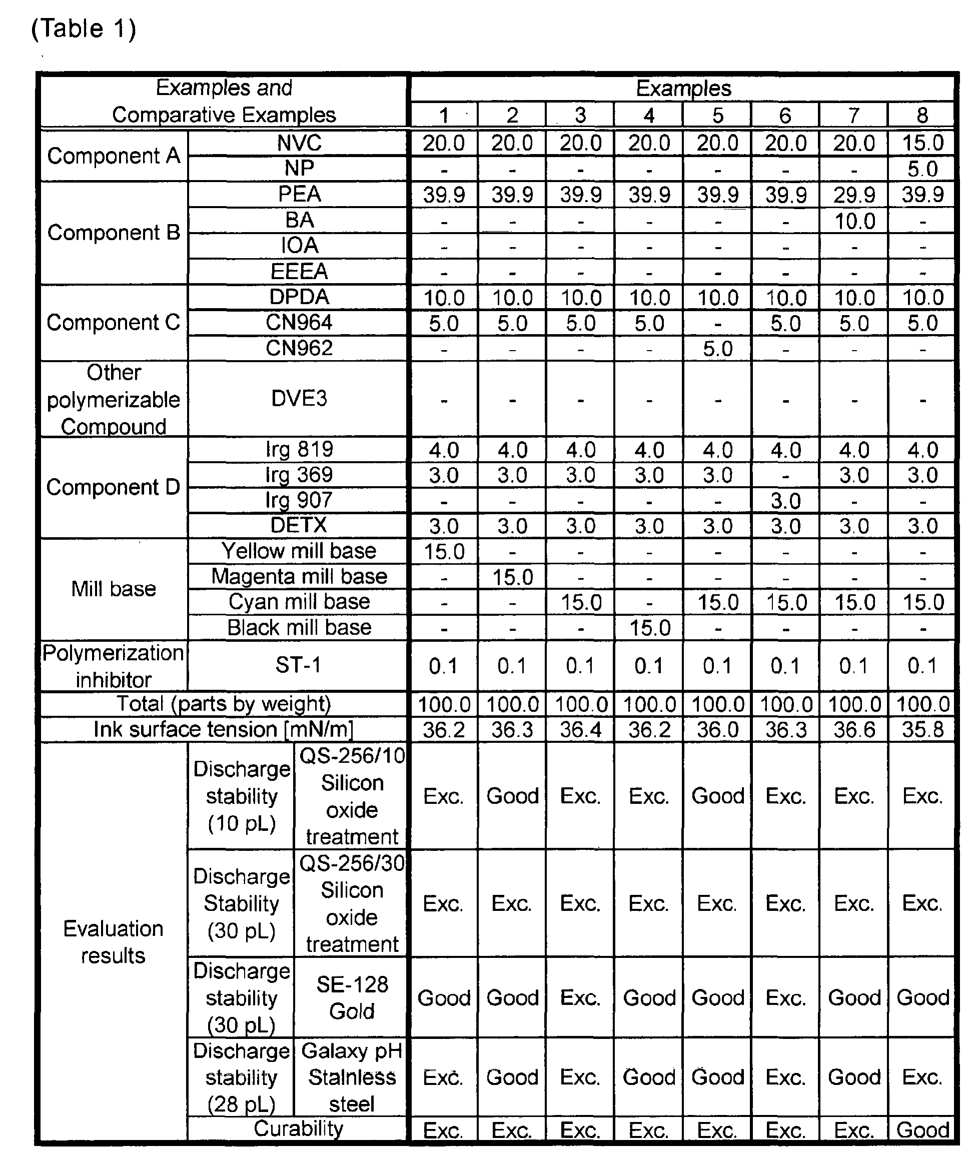

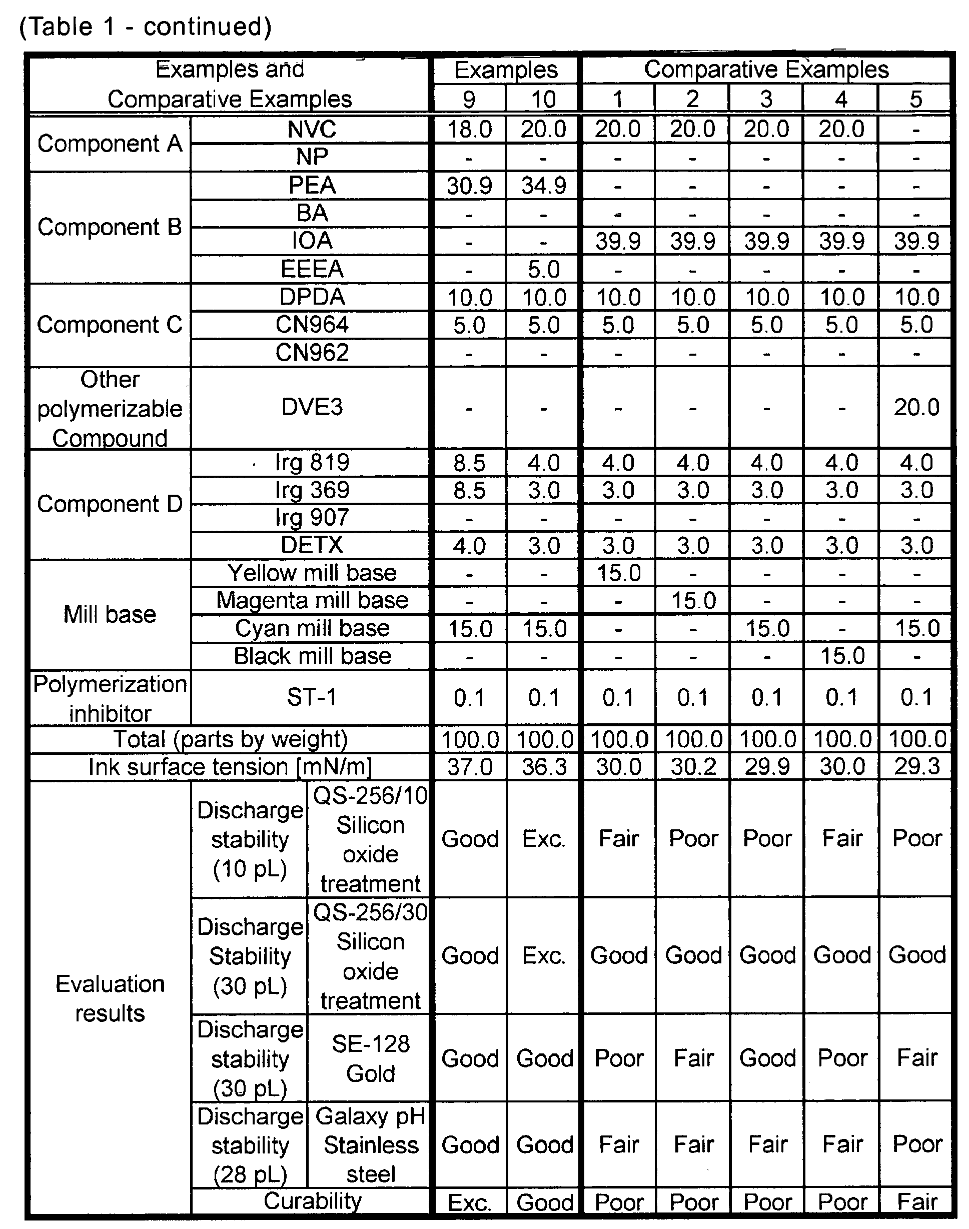

**(Table 2)**

| Examples and Comparative Examples | | | Examples | | | | |
|---|---|---|---|---|---|---|---|
| | | | 11 | 12 | 13 | 14 | 15 |
| Component A | NVC | | 20.0 | 20.0 | 20.0 | 20.0 | 20.0 |
| Component B | PEA | | 34.9 | 31.9 | 29.9 | 9.9 | 9.9 |
| | HPPA | | - | - | - | - | - |
| | IOA | | 5.0 | 7.5 | 10.0 | - | - |
| Component C | DPDA | | 10.0 | 10.5 | 10.0 | 40.0 | - |
| | HDDA | | - | - | - | - | 40.0 |
| | CN964 | | 5.0 | 5.0 | 5.0 | 5.0 | 5.0 |
| Component D | Irg 819 | | 4.0 | 4.0 | 4.0 | 4.0 | 4.0 |
| | Irg 369 | | 3.0 | 3.0 | 3.0 | 3.0 | 3.0 |
| | DETX | | 3.0 | 3.0 | 3.0 | 3.0 | 3.0 |
| Mill base | Cyan mill base | | 15.0 | 15.0 | 15.0 | 15.0 | 15.0 |
| Polymerization inhibitor | ST-1 | | 0.1 | 0.1 | 0.1 | 0.1 | 0.1 |
| Total (parts by weight) | | | 100.0 | 100.0 | 100.0 | 100.0 | 100.0 |
| Ink surface tension [mN/m] | | | 36.0 | 35.0 | 34.2 | 35.5 | 36.5 |
| Evaluation results | Discharge stability (10 pL) | QS-256/10 Silicon oxide treatment | Exc. | Good | Fair | Exc. | Exc. |
| | Discharge stability (30 pL) | QS-256/30 Silicon oxide treatment | Exc. | Good | Good | Good | Exc. |
| | Discharge stability (30 pL) | SE-128 Gold | Good | Good | Fair | Good | Good |
| | Discharge stability (28 pL) | Galaxy PH Stainless steel | Exc. | Good | Good | Good | Exc. |
| | Curability | | Exc. | Exc. | Exc. | Exc. | Exc. |

| Examples and Comparative Examples | | | Examples | | Comparative Examples | | |
|---|---|---|---|---|---|---|---|
| | | | 16 | 17 | 6 | 7 | 8 |
| Component A | NVC | | 5.0 | 20.0 | - | 20.0 | 20.0 |
| Component B | PEA | | 54.9 | 19.9 | 29.9 | 10.0 | 10.0 |
| | HPPA | | 10.0 | 30.0 | - | 44.9 | 42.9 |
| | IOA | | - | - | 20.0 | - | - |
| Component C | DPDA | | - | - | 20.0 | - | - |
| | HDDA | | - | - | - | - | - |
| | CN964 | | 5.0 | 5.0 | 5.0 | - | 2.0 |
| Component D | Irg 819 | | 4.0 | 4.0 | 4.0 | 4.0 | 4.0 |
| | Irg 369 | | 3.0 | 3.0 | 3.0 | 3.0 | 3.0 |
| | DETX | | 3.0 | 3.0 | 3.0 | 3.0 | 3.0 |
| Mill base | Cyan mill base | | 15.0 | 15.0 | 15.0 | 15.0 | 15.0 |
| Polymerization inhibitor | ST-1 | | 0.1 | 0.1 | 0.1 | 0.1 | 0.1 |
| Total (parts by weight) | | | 100.0 | 100.0 | 100.0 | 100.0 | 100.0 |
| Ink surface tension [mN/m] | | | 39.0 | 40.0 | 33.2 | 43.0 | 42.8 |
| Evaluation results | Discharge stability (10 pL) | QS-256/10 Silicon oxide treatment | Exc. | Exc. | Poor | Fair | Fair |
| | Discharge stability (30 pL) | QS-256/30 Silicon oxide treatment | Exc. | Exc. | Good | Fair | Fair |
| | Discharge stability (30 pL) | SE-128 Gold | Exc. | Good | Good | Poor | Poor |
| | Discharge stability (28 pL) | Galaxy PH Stainless steel | Exc. | Exc. | Fair | Fair | Fair |
| | Curability | | Exc. | Exc. | Good | Good | Good |

The components described in Table 1 and Table 2 above were as follows.
(Component A) *N*-vinyl compound
NVC; *N*-vinylcaprolactam (V-CAPTM, ISP Japan)
NP; *N*-vinylpyrrolidone (*N*-vinylpyrrolidone, Nippon Shokubai Co., Ltd.)
(Component B) monofunctional (meth)acrylate compound
PEA; phenoxyethyl acrylate (SR339A, Sartomer)
BA; benzyl acrylate (FA-BZA, Hitachi Chemical Co., Ltd.)
HPPA; 2-hydroxy-3-phenoxypropyl acrylate (EC620, Eternal Chemical)
IOA; isooctyl acrylate (SR440, Sartomer)
EEEA; 2-[2-(ethyloxy)ethyloxy]ethyl acrylate (SR256, Sartomer)
(Component C) polyfunctional (meth)acrylate compound
DPDA; dipropylene glycol diacrylate (SR508, Sartomer)
CN964; urethane acrylate oligomer (average number of functional groups 2, Sartomer Company Inc. Japan)
CN962; urethane acrylate oligomer (average number of functional groups 2, Sartomer Company Inc. Japan)
HDDA; 1,6-hexanediol diacrylate (SR238B, Sartomer)
(Others)
DVE3; triethylene glycol divinyl ether (RAPI-Cure DVE-3, ISP Japan)
(Component D) polymerization initiator
Irg 819; bis(2,4,6-trimethylbenzoyl)phenylphosphine oxide (IRGACURE® 819, Ciba Specialty Chemicals)
Irg 369; 2-benzyl-2-dimethylamino-1-(4-morpholinophenyl)butan-1-one (IRGACURE 369, Ciba Specialty Chemicals)
Irg 907; 2-methyl-1-(4-methylthiophenyl)-2-morpholinopropan-1-one (IRGACURE 907, Ciba Specialty Chemicals)
DETX; 2,4-diethylthioxanthone (KAYACURE DETX, Nippon Kayaku Co., Ltd.)
(Component F) polymerization inhibitor
ST-1; FIRSTCURE® ST-1 (polymerization inhibitor, Chem First)

It is thought that a small droplet (10 pL) of ink composition is more easily affected by an ink liquid film formed on the nozzle plate surface treated so as to have affinity for an ink than a large droplet (30 pL) of ink composition. It is surmised that the reason for the good discharge stability of the ink composition of the present invention is because an ink liquid film formed on the nozzle plate surface is properly maintained.

### Comparative Example 9

### Evaluation of discharge stability (42 pL)

After the ink composition used in Example 1 was stored at room temperature for two weeks, recording on a recording medium was carried out using inkjet recording equipment having a CA4 inkjet head (Toshiba Tec Corporation) having a nozzle plate that had not been treated so as to have affinity for an ink with the discharged liquid droplets fixed at 42 pL and a frequency fixed at 6.2 kHz, the head temperature was adjusted so as to give an ink viscosity of 9 cP, and the presence or absence of dot dropouts and ink scattering was visually examined when printing was carried out continuously for 1 hour and evaluated. From the results, dot dropouts or ink scattering occurred 11 times or more.

## Claims

1. An inkjet recording method comprising:
an image formation step of forming an image on a recording medium by discharging an ink composition comprising a polymerizable compound and a polymerization initiator and having a surface tension at 25°C in a range of 36 to 40.0 mN/m using an inkjet head having a nozzle plate (100-Figure 1) with a face on the ink discharge side (103-Figure 1)treated so as to have affinity for an ink( 101-Figure 1); and
a curing step of curing the ink composition by irradiating the discharged ink composition with actinic radiation.

2. The inkjet recording method according to Claim 1, wherein the polymerizable compound comprises (Component A) an *N*-vinyl compound, (Component B) a monofunctional (meth)acrylate compound, and (Component C) a polyfunctional (meth)acrylate compound.

3. The inkjet recording method according to Claim 1 or 2, wherein the nozzle plate comprises a layer formed from at least one type selected from the group consisting of diamond-like carbon, a metal, a semimetal oxide, a metal oxide, a semimetal nitride, and a metal nitride on at least part of the face on the ink discharge side.

4. The inkjet recording method according to any one or Claims 1 to 3, wherein the nozzle plate comprises a layer formed from at least one type selected from the group consisting of gold, stainless steel, iron, titanium, tantalum, platinum, rhodium, nickel, chromium, silicon oxide, silicon nitride, and aluminum nitride on at least part of the face on the ink discharge side.

5. The inkjet recording method according to any one of Claims 1 to 4, wherein the nozzle plate comprises a layer formed from at least one type selected from the group consisting of gold, stainless steel, and silicon oxide on at least part of the face on the ink discharge side.

6. The inkjet recording method according to any one of Claims 1 to 5, wherein the nozzle plate comprises a layer formed from at least one type selected from the group consisting of gold and silicon oxide on at least part of the face on the ink discharge side.

7. The inkjet recording method according to any one of Claims 1 to 6, wherein the nozzle plate comprises a layer formed from gold on at least part of the face on the ink discharge side.

8. The inkjet recording method according to any one of Claims 1 to 7, wherein the ink composition discharged in the image formation step has a liquid droplet volume of 1 to 100 pL.

9. The inkjet recording method according to any one of Claims 2 to 8, wherein Component B is an aromatic hydrocarbon group-containing (meth)acrylate compound.

10. The inkjet recording method according to any one of Claims 2 to 9, wherein Component B is 2-phenoxyethyl (meth)acrylate or benzyl (meth)acrylate.

11. The inkjet recording method according to any one of Claims 2 to 10, wherein Component C has a content in the ink composition of no greater than 50 wt%.

12. The inkjet recording method according to any one of Claims 1 to 11, wherein the polymerization initiator has a content in the ink composition of no greater than 20 wt%.

13. The inkjet recording method according to any one of Claims 1 to 12, wherein the ink composition further comprises a colorant.

14. The inkjet recording method according to Claim 13, wherein the colorant comprises a pigment or an oil-based dye.

15. The inkjet recording method according to any one of Claims 1 to 14, wherein the ink composition has a surface tension at 25°C of 36 to 39 mN/m.

16. The inkjet recording method according to any one of Claims 1 to 15, wherein the ink composition discharged in the image formation step has a liquid droplet volume of 10 to 30 pL.

17. The inkjet recording method according to any one of Claims 1 to 16, wherein the polymerization initiator in the ink composition comprises an acylphosphine compound and a thioxanthone compound and/or a thiochromanone compound.

18. The inkjet recording method according to any one of Claims 2 to 17, wherein Component C is a urethane (meth)acrylate-based oligomer.

## Patentansprüche

1. Tintenstrahlaufzeichnungsverfahren, umfassend:
einen Bildbildungsschritt des Bildens eines Bilds auf einem Aufzeichnungsmedium durch Austragen einer Tintenzusammensetzung, die eine polymerisierbare Verbindung und einen Polymerisationsinitiator umfasst und eine Oberflächenspannung bei 25°C in einem Bereich von 36 bis 40,0 mN/m aufweist, unter Verwendung eines Tintenstrahlkopfs mit einer Düsenplatte (100-Figur 1), wobei eine Fläche auf der Tintenaustragsseite (103-Figur 1) so behandelt ist, dass sie Affinität zu einer Tinte aufweist (101-Figur 1);
und einen Härtungsschritt des Härtens der Tintenzusammensetzung durch Bestrahlen der ausgetragenen Tintenzusammensetzung mit aktinischer Strahlung.

2. Tintenstrahlaufzeichnungsverfahren nach Anspruch 1, wobei die polymerisierbare Verbindung (Komponente A) eine *N*-Vinylverbindung, (Komponente B) eine monofunktionelle (Meth)acrylatverbindung und (Komponente C) eine polyfunktionelle (Meth)-acrylatverbindung umfasst.

3. Tintenstrahlaufzeichnungsverfahren nach Anspruch 1 oder 2, wobei die Düsenplatte eine aus mindestens einem Typ aus der Gruppe bestehend aus diamantähnlichem Kohlenstoff, einem Metall, einem Halbmetalloxid, einem Metalloxid, einem Halbmetallnitrid und einem Metallnitrid gebildete Schicht auf mindestens einem Teil der Fläche auf der Tintenaustragsseite umfasst.

4. Tintenstrahlaufzeichnungsverfahren nach einem der Ansprüche 1 bis 3, wobei die Düsenplatte eine aus mindestens einem Typ aus der Gruppe bestehend aus Gold, nichtrostendem Stahl, Eisen, Titan, Tantal, Platin, Rhodium, Nickel, Chrom, Siliciumoxid, Siliciumnitrid und Aluminiumnitrid gebildete Schicht auf mindestens einem Teil der Fläche auf der Tintenaustragsseite umfasst.

5. Tintenstrahlaufzeichnungsverfahren nach einem der Ansprüche 1 bis 4, wobei die Düsenplatte eine aus mindestens einem Typ aus der Gruppe bestehend aus Gold, nichtrostendem Stahl und Siliciumoxid gebildete Schicht auf mindestens einem Teil der Fläche auf der Tintenaustragsseite umfasst.

6. Tintenstrahlaufzeichnungsverfahren nach einem der Ansprüche 1 bis 5, wobei die Düsenplatte eine aus mindestens einem Typ aus der Gruppe bestehend aus Gold und Siliciumoxid gebildete Schicht auf mindestens einem Teil der Fläche auf der Tintenaustragsseite umfasst.

7. Tintenstrahlaufzeichnungsverfahren nach einem der Ansprüche 1 bis 6, wobei die Düsenplatte eine aus Gold gebildete Schicht auf mindestens einem Teil der Fläche auf der Tintenaustragsseite umfasst.

8. Tintenstrahlaufzeichnungsverfahren nach einem der Ansprüche 1 bis 7, wobei die im Bildbildungsschritt ausgetragene Tintenzusammensetzung ein Flüssigkeitströpfchenvolumen von 1 bis 100 pL aufweist.

9. Tintenstrahlaufzeichnungsverfahren nach einem der Ansprüche 2 bis 8, wobei es sich bei Komponente B um eine eine aromatische Kohlenwasserstoffgruppe enthaltende (Meth)acrylatverbindung handelt.

10. Tintenstrahlaufzeichnungsverfahren nach einem der Ansprüche 2 bis 9, wobei es sich bei Komponente B um 2-Phenoxyethyl(meth)acrylat onder Benzyl(meth)-acrylat handelt.

11. Tintenstrahlaufzeichnungsverfahren nach einem der Ansprüche 2 bis 10, wobei Komponente C einen Gehalt in der Tintenzusammensetzung von höchstens 50 Gew.-% aufweist.

12. Tintenstrahlaufzeichnungsverfahren nach einem der Ansprüche 1 bis 11, wobei der Polymerisationsinitiator einen Gehalt in der Tintenzusammensetzung von höchstens 20 Gew.-% aufweist.

13. Tintenstrahlaufzeichnungsverfahren nach einem der Ansprüche 1 bis 12, wobei die Tintenzusammensetzung ferner ein Farbmittel enthält.

14. Tintenstrahlaufzeichnungsverfahren nach Anspruch 13, wobei das Farbmittel ein Pigment oder einen auf Öl basierenden Farbstoff umfasst.

15. Tintenstrahlaufzeichnungsverfahren nach einem der Ansprüche 1 bis 14, wobei die Tintenzusammensetzung eine Oberflächenspannung bei 25°C von 36 bis 39 mN/m aufweist.

16. Tintenstrahlaufzeichnungsverfahren nach einem der Ansprüche 1 bis 15, wobei die im Bildbildungsschritt ausgetragene Tintenzusammensetzung ein Flüssigkeitströpfchenvolumen von 10 bis 30 pL aufweist.

17. Tintenstrahlaufzeichnungsverfahren nach einem der Ansprüche 1 bis 16, wobei der Polymerisationsinitiator in der Tintenzusammensetzung eine Acylphosphinverbindung und eine Thioxanthonverbindung und/oder eine Thiochromanonverbindung umfasst.

18. Tintenstrahlaufzeichnungsverfahren nach einem der Ansprüche 2 bis 17, wobei es sich bei Komponente C um ein auf Urethan(meth)acrylat basierendes Oligomer handelt.

## Revendications

1. Procédé d'enregistrement par jet d'encre comprenant :
une étape de formation d'image consistant à former une image sur un support d'enregistrement en déchargeant une composition d'encre comprenant un composé polymérisable et un initiateur de polymérisation et ayant une tension superficielle à 25 °C dans une gamme de 36 à 40,0 mN/m en utilisant une tête de jet d'encre ayant une plaque de buse (100 - Figure 1) avec une face sur le côté de décharge d'encre (103 - Figure 1) traitée de manière à avoir une affinité pour une encre (101 - Figure 1) ; et
une étape de durcissement consistant à durcir la composition d'encre en irradiant la composition d'encre déchargée avec un rayonnement actinique.

2. Procédé d'enregistrement par jet d'encre selon la revendication 1, dans lequel le composé polymérisable comprend un composé N-vinylique (composant A), un composé de (méth)acrylate monofonctionnel (composant B), et un composé de (méth)acrylate polyfonctionnel (composant C).

3. Procédé d'enregistrement par jet d'encre selon la revendication 1 ou 2, dans lequel la plaque de buse comprend une couche formée à partir d'au moins un type choisi dans le groupe constitué par le carbone de type diamant, un métal, un oxyde semi-métallique, un oxyde métallique, un nitrure semi-métallique et un nitrure métallique sur au moins une partie de la face sur le côté de décharge d'encre.

4. Procédé d'enregistrement par jet d'encre selon l'une quelconque des revendications 1 à 3, dans lequel la plaque de buse comprend une couche formée à partir d'au moins un type choisi dans le groupe constitué par l'or, l'acier inoxydable, le fer, le titane, le tantale, le platine, le rhodium, le nickel, le chrome, l'oxyde de silicium, le nitrure de silicium et le nitrure d'aluminium sur au moins une partie de la face sur le côté de décharge d'encre.

5. Procédé d'enregistrement par jet d'encre selon l'une quelconque des revendications 1 à 4, dans lequel la plaque de buse comprend une couche formée à partir d'au moins un type choisi dans le groupe constitué par l'or, l'acier inoxydable et l'oxyde de silicium sur au moins une partie de la face sur le côté de décharge d'encre.

6. Procédé d'enregistrement par jet d'encre selon l'une quelconque des revendications 1 à 5, dans lequel la plaque de buse comprend une couche formée à partir d'au moins un type choisi dans le groupe constitué par l'or et l'oxyde de silicium sur au moins une partie de la face sur le côté de décharge d'encre.

7. Procédé d'enregistrement par jet d'encre selon l'une quelconque des revendications 1 à 6, dans lequel la plaque de buse comprend une couche constituée d'or sur au moins une partie de la face sur le côté de décharge d'encre.

8. Procédé d'enregistrement par jet d'encre selon l'une quelconque des revendications 1 à 7, dans lequel la composition d'encre déchargée lors de l'étape de formation d'image a un volume de gouttelette liquide de 1 à 100 pl.

9. Procédé d'enregistrement par jet d'encre selon l'une quelconque des revendications 2 à 8, dans lequel le composant B est un composé de (méth)acrylate contenant un groupe hydrocarboné aromatique.

10. Procédé d'enregistrement par jet d'encre selon l'une quelconque des revendications 2 à 9, dans lequel le composant B est le (méth)acrylate de 2-phénoxyéthyle ou le (méth)acrylate de benzyle.

11. Procédé d'enregistrement par jet d'encre selon l'une quelconque des revendications 2 à 10, dans lequel le composant C a une teneur dans la composition d'encre ne dépassant pas 50 % en poids.

12. Procédé d'enregistrement par jet d'encre selon l'une quelconque des revendications 1 à 11, dans lequel l'initiateur de polymérisation a une teneur dans la composition d'encre ne dépassant pas 20 % en poids.

13. Procédé d'enregistrement par jet d'encre selon l'une quelconque des revendications 1 à 12, dans lequel la composition d'encre comprend en outre un colorant.

14. Procédé d'enregistrement par jet d'encre selon la revendication 13, dans lequel le colorant comprend un pigment ou une teinture à base d'huile.

15. Procédé d'enregistrement par jet d'encre selon l'une quelconque des revendications 1 à 14, dans lequel la composition d'encre a une tension superficielle à 25 °C de 36 à 39 mN/m.

16. Procédé d'enregistrement par jet d'encre selon l'une quelconque des revendications 1 à 15, dans lequel la composition d'encre déchargée lors de l'étape de formation d'image a un volume de gouttelette liquide de 10 à 30 pl.

17. Procédé d'enregistrement par jet d'encre selon l'une quelconque des revendications 1 à 16, dans lequel l'initiateur de polymérisation dans la composition d'encre comprend un composé d'acylphosphine et un composé de thioxanthone et/ou un composé de thiochromanone.

18. Procédé d'enregistrement par jet d'encre selon l'une quelconque des revendications 2 à 17, dans lequel le composant C est un oligomère à base de (méth)acrylate d'uréthane.
